# EUROPÄISCHE PATENTSCHRIFT

(11) **EP 4 296 201 B1**
(45) Veröffentlichungstag und Bekanntmachung des Hinweises auf die Patenterteilung: **17.09.2025**
(21) Anmeldenummer: 23179566.7
(22) Anmeldetag: 15.06.2023
(51) Int. Cl.: H02K 15/0421, B65G 1/12, B23Q 7/10, B65G 1/14, B65G 59/04, B65G 65/00, H02K 15/00

(54) **KASSETTE ZUR LAGERUNG EINES STAPELS VON UNGEBOGENEN STABLEITERN**
CASSETTE FOR SUPPORTING A STACK OF UNBENT BAR CONDUCTORS
CASSETTE POUR STOCKER UNE PILE DE CONDUCTEURS À BARRES NON-CIRCULAIRES

(30) Priorität: 24.06.2022 DE 102022206403
(43) Veröffentlichungstag der Anmeldung: 27.12.2023
(73) Patentinhaber: FELSOMAT GmbH & Co. KG, 75203 Königsbach-Stein (DE)
(72) Erfinder: Zachmann, Raphael, 75196 Remchingen (DE); Peschina, Jürgen, 75438 Knittlingen (DE)
(74) Vertreter: Kohler Schmid Möbus Patentanwälte

(56) Entgegenhaltungen:
- EP-A1- 3 743 986
- WO-A2-2007/005927
- CN-A- 110 654 880
- DE-A1- 1 627 322
- DE-A1- 2 716 330
- DE-A1- 3 810 657
- JP-A- 2006 294 314
- JP-A- S59 133 123

## Beschreibung

Die Erfindung betrifft eine Kassette zur Lagerung eines Stapels von ungebogenen Stableitern.

Für die Fertigung elektrodynamischer Maschinen, wie elektrischer Generatoren oder elektrischer Motoren, können kupferhaltige, gebogene Stableiter verwendet werden.

Die Herstellung gebogener Stableiter kann dabei in einer Maschinenlinie wie folgt ablaufen: Ein mit einer Isolierschicht ummantelter und isolierter Kupferlackdraht wird von einer Drahtrolle abgerollt und begradigt. In gleichen Abständen wird die Ummantelung des begradigten Kupferflachdrahts entfernt ("abisoliert"), beispielsweise durch ein Schneidwerkzeug oder mittels eines Laserstrahls. Der Kupferflachdraht wird dann in den abisolierten Bereichen in gleich lange, ungebogene Stableiter (auch als I-Pins bezeichnet) geteilt. Die so erhaltenen ungebogenen Stableiter können dann direkt an eine Biegestation weitergegeben und dort zu einem gebogenen Stableiter weiterverarbeitet werden.

Für die Fertigung einer einzelnen elektrodynamischen Maschinen werden in der Regel gebogene Stableiter unterschiedlicher Länge benötigt. Typischerweise ist die Maschinenlinie zur Herstellung der gebogenen Stableiter so eingestellt, dass genau die richtige Anzahl an unterschiedlich langen Stableitern für die einzelne, zu fertigende elektrodynamische Maschine hergestellt wird. Während der Herstellung gebogener Stableiter können jedoch Produktionsfehler auftreten. Beispielsweise kann der auf der Drahtrolle aufgerollte Kupferflachdraht bereits Beschädigungen aufweisen, wie etwa Ausnehmungen in der Ummantelung. Auch können beim Abisolieren oder beim Teilen des Kupferflachdrahts Fertigungsfehler auftreten, beispielsweise durch eine unzureichende Abisolierung am Kupferflachdraht oder eine ungleichmäßige Teilung des abisolierten Kupferflachdrahts.

Produktionsfehlerbehaftete, ungebogene Stableiter sind für die Fertigung einer elektrodynamischen Maschine unbrauchbar und werden dementsprechend aussortiert. Dieses Aussortieren kann jedoch die Produktionszeit erhöhen. Durch das Aussortieren fehlt ein Stableiter für die Fertigung, welcher erst nachproduziert werden muss. Das Nachproduzieren wiederum verkompliziert die Fertigung der elektrodynamischen Maschine. Es können sich Verzögerungen bei der Produktion gebogener Stableiter und hiervon ausgehend eine Verzögerung bei der Fertigung der elektrodynamischen Maschine ergeben.

Anstatt die ungebogenen Stableiter in der Maschinenlinie direkt an die Biegestation weiterzugeben, kann ein Zwischenlager eingerichtet werden, in welches die ungebogenen Stableiter hineinproduziert und für eine entsprechende Verarbeitung entnommen werden können. Die ungebogenen Stableiter können hierzu auf einer separaten Ablage, beispielsweise einer Palette, aufgelegt werden. Der Transport zu einem Lager oder einer Biegestation muss jedoch vorsichtig durchgeführt werden. Die (lose) auf der Ablage angeordneten Stableiter können beim Transport leicht verrutschen und durch Stöße oder Herunterfallen von der Ablage deformiert werden, wodurch sie dann für die Fertigung einer elektrodynamischen Maschine ungeeignet sind.

Die CN 110654880 A, die als nächstkommender Stand der Technik angesehen wird, offenbart eine Kassette gemäß dem Oberbegriff des Anspruchs 1 und eine Zuführvorrichtung für keramische Substrate. Diese umfasst mehrere Rahmen, in denen jeweils ein Hebeblock angeordnet ist, der an einer Hebeschnittstelle von der Seite untergriffen werden kann. Der Hebeblock ist in Stapelschlitzen geführt.

### Aufgabe der Erfindung

Es ist Aufgabe der Erfindung, eine Lagerstruktur für ungebogene Stableiter zur Verfügung zu stellen, mit der eine Vielzahl von ungebogenen Stableitern einfach und schonend eingelagert, sicher verwahrt und wieder für eine Weiterverarbeitung bereitgestellt werden kann.

### Beschreibung der Erfindung

Diese Aufgabe wird erfindungsgemäß gelöst durch eine Kassette,
umfassend
- einen Kassettenrahmen mit einem ersten Wandelement und einem zweiten Wandelement, die einander gegenüberliegen,
   wobei zwischen den gegenüberliegenden Wandelementen ein Zwischenraum ausgebildet ist,
   und wobei der Zwischenraum durch zueinander parallel ausgerichtete Anlegeflächen der Wandelemente für die Stableiter begrenzt ist,
- und ein Auflageelement, das zwischen den Wandelementen entlang einer Stapelrichtung verschiebbar geführt ist,
   wobei das Auflageelement in einer bezüglich der Stapelrichtung untersten Position am Kassettenrahmen anschlägt,
   wobei das Auflageelement an einer Oberseite eine Auflagefläche für den Stapel von ungebogenen Stableitern ausbildet,
   wobei die Kassette so ausgebildet ist, dass das Auflageelement für eine externe Hubeinrichtung für ein Verschieben zwischen den Wandelementen zugänglich ist,
   wobei der Kassettenrahmen an einer Beladungsseite, die einer Bodenseite bezüglich der Stapelrichtung gegenüberliegt, einen Beladungsspalt für das Einlegen und Entnehmen eines obersten Stableiters des Stapels von ungebogenen Stableitern auf der Auflagefläche aufweist,
   und wobei die Wandelemente relativ zur Beladungsseite zurückgesetzte Rücksprünge beiderseits des Beladungsspalts aufweisen.

Die Erfindung schlägt also vor, eine Kassette ("Lagerkassette") mit einem verfahrbaren Auflageelement für einen Stapel von ungebogenen Stableitern zur Verfügung zu stellen. Das Auflageelement kann mittels einer Hubeinrichtung verschoben werden.

Die Kassette umfasst zwei gegenüberliegende Wandelemente, zwischen denen ein Zwischenraum ausgebildet ist. Die Wandelemente können an den Stirnseiten über durchgängig ausgebildete oder teilweise unterbrochene Stirnelemente miteinander verbunden sein. Im Zwischenraum ist zwischen den Wandelementen das Auflageelement verschiebbar angeordnet. Die Länge und Breite des Zwischenraum ist so groß gewählt, dass ein auf dem Auflageelement angeordneter, ungebogener Stableiter praktisch nicht mehr verschieben, verrutschen oder verkippen kann. Weiterhin können die ungebogenen Stableiter besonders gut durch die Kassette hindurchgeführt werden, da im Zwischenraum Anlegeflächen der Wandelemente parallel zueinander ausgerichtet sind und somit eine gute Führung vorgeben. An der Stirnseite werden die Stableiter zumindest teilweise hintergriffen, sodass auch bezüglich der Längsrichtung eine Führung vorgegeben ist. Die Kassette bietet eine stabile Lagerstruktur, in welcher ein Stapel ungebogener Stableiter sicher verwahrt werden kann.

An einer Beladungsseite der Kassette (obere Seite der Kassette) ist ein Beladungsspalt ausgebildet, über den ein ungebogener Stableiter auf eine Auflagefläche des Auflageelements oder einen bereits platzierten (obersten) Stableiter in die Kassette eingelegt werden kann oder aus der Kassette entnommen werden kann. Das Einlegen oder Entnehmen der Stableiter erfolgt in unmittelbarer Nähe zum Beladungsspalt an der Beladungsseite der Kassette. Hierfür kann das Auflageelement mit einer Hubeinrichtung auf eine entsprechende Höhe im Zwischenraum verfahren werden. Auf diese Weise können die Stableiter besonders einfach und schonend auf dem Auflageelement oder einem bereits platzierten Stableiter in die Kassette eingelegt werden. Insbesondere kann beim Einlegen so vermieden werden, dass der zu platzierende Stableiter in die Kassette hineinfällt und beim Auftreffen auf das Auflageelement oder einen bereits platzierten Stableiter beschädigt und somit unbrauchbar wird.

Durch Absenken des Auflageelements können weitere Stableiter sicher in die Kassette eingelegt werden. Durch Hochfahren des Auflageelements können die Stableiter einzeln und sicher entnommen und für eine Weiterverarbeitung bereitgestellt werden.

Die Hubeinrichtung kann beispielsweise seitlich oder an einer Unterseite des Auflageelements angreifen. Mit der Hubeinrichtung kann das Auflageelement präzise im Zwischenraum der Kassette verschoben werden.

Die einzelnen Elemente der Kassette können aus Edelstahl gefertigt sein. Die ungebogenen Stableiter können beispielsweise als kupferhaltige Flachdrähte ausgebildet sein, deren Enden abisoliert worden sind. Typischerweise weist die Kassette eine Vielzahl von Durchbrüchen auf, um das Gewicht der Kassette zu verringern und Material zur Herstellung der Kassette zu sparen.

Erfindungsgemäß ist vorgesehen, dass die Wandelemente relativ zur Beladungsseite zurückgesetzte Rücksprünge beiderseits des Beladungsspalts aufweisen. An den Rücksprüngen können Messungen stattfinden, um den Beladungszustand der Kassette oder die Verfahrhöhe des Auflageelements oder die Ausrichtung der Stableiter oder des Auflageelements zu bestimmen. Ebenfalls können durch die Rücksprünge Störkonturen für einen Stableiter-Greifer vermieden werden. Außerdem kann auf diese Weise Material eingespart und das Gewicht der Kassette verringert werden.

### Bevorzugte Ausführungsformen der erfindungsgemäßen Kassette

Besonders bevorzugt ist eine Ausführungsform der erfindungsgemäßen Kassette, bei der der Kassettenrahmen an der Bodenseite wenigstens eine Betätigungsöffnung ausbildet, über die eine Unterseite des Auflageelements für einen Untergriff durch die externe Hubeinrichtung zugänglich ist.

Hierdurch kann ein platzsparender und einfach umzusetzender Aufbau realisiert werden. Insbesondere kann der Raum an Stirnseiten der Kassette beliebig gestaltet werden, insbesondere können die Stirnseiten der Kassette geschlossen ausgebildet werden. Bevorzugt können die Wandelemente in den Zwischenraum hinein im Bereich der Bodenseite Vorsprünge ausbilden, welche verhindern, dass das Auflageelement aus der Bodenöffnung herausfällt. Ebenso ist es möglich, die Ausdehnung der Bodenöffnung kleiner als das Auflageelement zu wählen, sodass das Auflageelement nicht aus der Bodenöffnung herausfallen kann.

Weiterhin bevorzugt ist eine Ausführungsform, bei der der Kassettenrahmen an der Bodenseite Bodenrollen aufweist, auf denen die Kassette verfahrbar ist, insbesondere wobei Achsen der Bodenrollen ausgerichtet sind für eine erste Verfahrrichtung parallel zu den Anlegeflächen.

Hierdurch kann der Transport der Kassette innerhalb einer Maschinenlinie oder zu einem Lager hin oder von einem Lager weg vereinfacht und die Kassette so sicher an ihren jeweiligen Zielort verbracht werden. Die Kassette muss nicht angehoben oder mit der Bodenseite am Boden entlang geschleift werden. Hierdurch wird die Wahrscheinlichkeit verringert, dass die Stableiter durch häufiges Anheben oder Absetzen der Kassette beschädigt werden. Durch leichtes Neigen der Kassette sind ebenso Kurvenfahrten möglich.

Bevorzugt weist der der Kassettenrahmen an Stirnseiten des Kassettenrahmens, die senkrecht zu den Anlegeflächen liegen, Seitenrollen auf, an denen die Kassette aufgehängt und verfahren werden kann, insbesondere wobei Achsen der Seitenrollen ausgerichtet sind für eine zweite Verfahrrichtung senkrecht zu den Anlegeflächen.

Auf diese Weise kann die Kassette gut in einem Kassettenlager transportiert werden. Die Kassette kann mit den Seitenrollen auf eine Rollführung in einem Kassettenlager eingesetzt werden. Im Kassettenlager kann die Kassette dann auf einfache Weise von einem Lageristen bewegt und an die gewünschte Position verbracht werden. Bei einer leichten Neigung der Rollführung kann die Kassette von selbst durch die Schwerkraft bewegt werden. Man beachte, dass die Seitenrollen in der oberen Hälfte der Kassette (von der Beladungsseite aus gesehen), bevorzugt im oberen Drittel der Kassette angeordnet sind, also oberhalb des Schwerpunkts der Kassette. Hierdurch kann ein Überkippen der Kassette und somit ein Herausfallen der Stableiter aus der Kassette verhindert werden.

Besonders bevorzugt ist am Kassettenrahmen ein RFID-Chip angeordnet, mit dem ein in der Kassette gelagerter Stapel von ungebogenen Stableitern identifizierbar ist.

Die Identifikation einer Charge ungebogener Stableiter ist wichtig für die Qualitätskontrolle in der Produktion und sehr häufig von den Produzenten elektrodynamischer Maschinen gewünscht. Der RFID-Chip ermöglicht es auf einfache Weise, eine bestimmte Charge an ungebogenen Stableitern zu identifizieren und zurückzuverfolgen. Der RFID-Chip kann beispielsweise in einer Vertiefung am Kassettenrahmen angebracht werden und nimmt so keinen oder nur wenig zusätzlichen Raum ein. Der RFID-Chip kann Informationen über die in der Kassette gelagerten Stableiter unmittelbar speichern, oder durch einen Identifikationscode eine Zuordnung in einer externen Datenbank ermöglichen, welche die Informationen enhält.

Ebenfalls bevorzugt ist eine Ausführungsform, bei der außenseitlich am Kassettenrahmen mehrere Gleitstücke zum Führen der Kassette entlang einer externen Gleitführung angeordnet sind, insbesondere wobei außenseitlich an jedem Wandelement an vier Ecken Gleitstücke vorgesehen sind.

Hierdurch kann die Kassette gut entlang der externen Gleitführung geführt werden. Außerdem kann eine stabile und schonende Führung der Kassette erreicht werden, sodass die gelagerten Stableiter keinen oder nur minimalen Erschütterungen ausgesetzt sind.

Bevorzugt ist auch eine Ausführungsform, in der in den Kassettenrahmen ein reversibel einfügbares, sich in Stapelrichtung erstreckendes Teilerelement eingesetzt ist, mit dem der Zwischenraum in einen Nutzteil und einen Nicht-Nutzteil aufgeteilt ist, und wobei das Auflageelement im Nutzteil zwischen den Wandelementen verschiebbar geführt ist.

Durch das Teilerelement kann die Kassette so modifiziert werden, dass ungebogenen Stableiter mit einer von der Größe (Länge) der Kassette abweichenden, kürzeren Länge in der Kassette sicher gelagert werden können. Dadurch ist es nicht nötig, eine Vielzahl von Kassetten unterschiedlicher Größe für ungebogene Stableiter unterschiedlicher Länge zu produzieren. Die Kassette kann standardisiert in einer Größe hergestellt werden und mittels des Teilerelements dann für die gewünschte Länge einer Charge ungebogener Stableiter angepasst werden. Man beachte, dass je nach Position des Teilerelements auch in der Regel entsprechend große (lange) Auflageelemente im Nutzteil des Zwischenraums eingesetzt werden.

Ebenfalls besonders bevorzugt ist eine Ausführungsform, bei der an Hauptseiten des Kassettenrahmens, die parallel zu den Anlegeflächen liegen, die Wandelemente eine Vielzahl von Durchbrüchen aufweisen.

Auf diese Weise kann viel Material bei der Herstellung der Kassetten eingespart werden und zugleich immer noch eine ausreichend gute Stabilität bei der Lagerung von ungebogenen Stableitern erzielt werden. Durch die Materialeinsparungen verringern sich die Kosten für die Herstellung der Kassette. Weiterhin kann durch die Materialeinsparung das Gewicht der Kassette gering gehalten werden, was einen Transport der Kassette erleichtert. Zudem kann von außen der Beladungszustand der Kassette leicht ersehen werden.

### Erfindungsgemäßes Stapelsystem

In den Rahmen der vorliegenden Erfindung fällt auch ein Stapelsystem, umfassend eine wie oben beschriebene, erfindungsgemäße Kassette und wenigstens eine Hubeinrichtung, die am Auflageelement angreift und mit der das Auflageelement zwischen den Wandelementen verfahrbar ist.

Die Hubeinrichtung kann auf einfache Weise das Auflageelement in Stapelrichtung anheben und absenken. Beim Beladen der Kassette wird die Hubeinrichtung so weit ausgefahren, dass der erste ungebogene Stableiter schonend und sicher auf dem Auflageelement platziert werden kann. Die Hubeinrichtung kann daraufhin dann geringfügig abgesenkt werden, sodass der nächste ungebogene Stableiter schonend und sicher auf dem vorherigen Stableiter platziert werden kann. Die ungebogenen Stableiter können so nach und nach in der Kassette versenkt und anschließend in einem Lager sicher gelagert werden. Bei der Entnahme von Stableitern kann die Hubeinrichtung langsam angehoben werden, sodass die ungebogenen Stableiter einzeln und sicher von oben am Beladungsspalt entnommen werden können.

Bevorzugt ist eine Ausführungsform des erfindungsgemäßen Stapelsystems, in der das Stapelsystem einen ersten Sensor umfasst, mit dem eine Verfahrposition der Auflagefläche des Auflageelements und/oder eines obersten Stableiters eines Stapels von ungebogenen Stableitern auf der Auflagefläche des Auflageelements bezüglich der Stapelrichtung relativ zur Ebene der Beladungsseite im Bereich des ersten Sensors überprüfbar ist.

Hierdurch kann auf einfache Weise festgestellt werden, ob das Auflageelement oder der oberste Stableiter für ein Beladen oder Entladen der Kassette zu hoch oder zu niedrig oder korrekt angeordnet ist. Als Sensor kann beispielsweise ein Lichtunterbrechungssensor oder eine Kamera mit einem Algorithmus zur Bildauswertung eingesetzt werden.

Ebenso bevorzugt ist eine Weiterbildung dieser Ausführungsform, bei der das Stapelsystem weiterhin eine Steuereinrichtung umfasst, die mit dem ersten Sensor und der wenigstens einen Hubeinrichtung verbunden ist, wobei die Steuereinrichtung dazu eingerichtet ist, das Auflageelement mit der Hubeinrichtung automatisch in eine Position bezüglich der Stapelrichtung zu verfahren, die geeignet ist für
- eine Ablage eines nächstens Stableiters auf der Auflagefläche oder auf einem obersten Stableiter eines Stapels von ungebogenen Stableitern auf der Auflagefläche, oder
- eine Entnahme eines obersten Stableiters eines Stapels von ungebogenen Stableitern auf der Auflagefläche.

Auf diese Weise ist eine präzise Steuerung der Hubeinrichtung möglich. Die Hubeinrichtung kann so verfahren werden, dass der oberste Stableiter schonend und präzise auf der Auflagefläche oder dem nächsten Stableiter abgelegt oder sicher abgenommen werden kann.

Besonders bevorzugt ist eine alternative Weiterbildung, die dadurch gekennzeichnet ist, dass das Stapelsystem zwei Hubeinrichtungen aufweist, die an unterschiedlichen Stellen entlang einer Längsrichtung des Kassettenrahmens am Auflageelement angreifen, wobei die Längsrichtung parallel zu den Anlegeflächen und senkrecht zur Stapelrichtung verläuft,
und dass das Stapelsystem weiterhin einen zweiten Sensor umfasst, mit dem eine Verfahrposition der Auflagefläche des Auflageelements und/oder eines obersten Stableiters eines Stapels von ungebogenen Stableitern auf der Auflagefläche des Auflageelements bezüglich der Stapelrichtung relativ zur Ebene der Beladungsseite im Bereich des zweiten Sensors überprüfbar ist, wobei der erste Sensor und der zweite Sensor an unterschiedlichen Stellen entlang der Längsrichtung des Kassettenrahmens angeordnet sind.

Durch die zwei Hubeinrichtungen kann das Auflageelement mit einer Neigung gegenüber der Ebene des Beladungsspalts versehen werden. Wenn die Stableiter an ihren Enden ungleichmäßig dick (in Stapelrichtung) sind, etwa infolge des Abisolierprozesses, kann der Stapel von Stableitern eine Schräge an seiner Oberseite gegenüber der Auflageebene aufbauen. Dies kann mittels der zwei Hubeinrichtungen ausgeglichen werden. Mittels des ersten und zweiten Sensors kann die Beladungsposition für den obersten ungebogenen Stableiter einschließlich der Ausrichtung überprüft und eine mögliche Schräglage erkannt und ausgeglichen werden.

In einer weiteren Weiterentwicklung ist vorgesehen, dass das Stapelsystem eine Steuereinrichtung umfasst, die mit dem ersten Sensor und dem zweiten Sensor und den zwei Hubeinrichtungen verbunden ist, wobei die Steuereinrichtung dazu eingerichtet ist, das Auflageelement mit den beiden Hubeinrichtungen automatisch in eine Position bezüglich der Stapelrichtung zu verfahren, die geeignet ist für
- eine Ablage eines nächsten Stableiters auf der Auflagefläche oder auf einem obersten Stableiter eines Stapels von ungebogenen Stableitern auf der Auflagefläche, wobei die zur Ablage dienende Auflagefläche oder der zur Ablage dienende oberste Stableiter in einer zur Ebene der Beladungsseite parallelen Ausrichtung gehalten wird, oder
- eine Entnahme eines obersten Stableiters eines Stapels von ungebogenen Stableitern auf der Auflagefläche, wobei der zu entnehmende oberste Stableiter in einer zur Ebene der Beladungsseite parallelen Ausrichtung gehalten wird.

Mittels der Steuereinrichtung ist eine präzise Steuerung der Hubeinrichtungen möglich. Die Hubeinrichtung kann eine mögliche Schräglage der Stableiter ausgleichen, wodurch der oberste Stableiter schonend und präzise abgelegt oder sicher abgenommen werden kann.

Besonders bevorzugt ist auch eine Weiterentwicklung, die dadurch gekennzeichnet ist, dass der Kassettenrahmen an der Bodenseite wenigstens eine Betätigungsöffnung ausbildet, und dass die wenigstens eine Hubeinrichtung mit einem Schwertelement durch die Betätigungsöffnung an einer Unterseite des Auflageelements das Auflageelement untergreift.

Hierdurch kann ein platzsparender Aufbau realisiert werden. Insbesondere wird der Raum an Stirnseiten der Kassette nicht von der externen Hubeinrichtung benötigt. Das Schwertelement kann eine gerade verlaufende, horizontal verlaufende Anlagekante oder Anlagefläche aufweisen, insbesondere wenn ein Hubelement vorgesehen ist. Mit dem Schwertelement kann das Auflageelement sicher ergriffen und gleichmäßig verfahren werden. Bevorzugt können die Wandelemente in den Zwischenraum hinein im Bereich der Bodenseite Vorsprünge ausbilden, welche verhindern, dass das Auflageelement aus der Bodenöffnung herausfällt. Ebenso ist es möglich, die Ausdehnung der Bodenöffnung kleiner als die Ausdehnung des Auflageelements zu wählen, sodass das Auflageelement nicht aus der Bodenöffnung herausfallen kann.

### Erfindungsgemäße Fertigungsanlage

In den Rahmen der vorliegenden Erfindung fällt ebenfalls eine Fertigungsanlage für Stableiter, umfassend
- wenigstens eine Fertigungsstation zur Fertigung von ungebogenen Stableitern, insbesondere jeweils mit einer Richteinrichtung für Bandmaterial, einer Abisoliereinrichtung für das Bandmaterial, einer Schneideinrichtung für das Bandmaterial und einer Automatisierungseinrichtung zum Übergeben von gefertigten ungebogenen Stableitern an ein Stapelsystem,
- wenigstens ein wie oben beschriebenes, erfindungsgemäßes erstes Stapelsystem, zum Einlagern von mit der wenigstens einen Fertigungsstation gefertigten, ungebogenen Stableitern in Kassetten,
- ein Zwischenlager für mit ungebogenen Stableitern gefüllte Kassetten;
- wenigstens ein wie oben beschriebenes, erfindungsgemäßes zweites Stapelsystem, zum Bereitstellen von ungebogenen Stableitern an wenigstens einer Biegestation;
- wenigstens eine Biegestation zur Umformung von ungebogenen Stableitern in gebogene Stableiter, insbesondere mit einer Biegeeinrichtung und einer Automatisierungseinrichtung zum Übergeben von ungebogenen Stableitern von einem Stapelsystem an die Biegeeinrichtung.

Mit der Fertigungsstation können auf einfache Weise eine Vielzahl von ungebogenen Stableitern gefertigt werden. Diese können dann wiederum in einer erfindungsgemäßen Kassette eingelagert und an ein Zwischenlager übergeben werden. Die Kassette kann dann je nach Bedarf an eine Biegestation weitergegeben werden. Mit der erfindungsgemäßen Fertigungsanlage wird eine direkte Übergabe der ungebogenen Stableiter von der Fertigungsstation an die Biegestation vermieden. Die Fertigung gebogener Stableiter kann hierdurch flexibilisiert werden und ist weniger anfällig für Störungen des Produktionsprozesses, etwa durch Produktionsfehler bei der Fertigung der I-Pins.

Weiterhin bevorzugt ist eine Ausführungsform der erfindungsgemäßen Fertigungsanlage, bei der die Anzahl der Biegestationen größer ist als die Anzahl der Fertigungsstationen.

In vielen Fällen ist die Fertigung ungebogener Stableiter schneller als das Biegen eines ungebogenen Stableiters in einen gebogenen Stableiter. Typischerweise wird ungefähr pro Sekunde ein ungebogener Stableiter gefertigt. Der Biegevorgang dauert typischerweise ungefähr drei bis vier Sekunden. Durch die Zwischenlagerung in der Kassette bzw. den Kassetten ist es möglich, die Fertigungsstation auf voller Geschwindigkeit arbeiten zu lassen. Die gelagerten Kassetten können dann an die jeweiligen Biegestationen verbracht werden. Auf diese Weise wird es möglich, dass eine Fertigungsstation mehrere Biegestationen beliefern kann. Hierdurch kann die Effizienz bei der Herstellung von gebogenen Stableitern erhöht und eine maximale Auslastung bei der Fertigungsstation und bei den Biegestationen erreicht werden.

### Verwendung der erfindungsgemäßen Kassette

Ebenfalls in den Rahmen der vorliegenden Erfindung fällt eine Verwendung einer wie oben beschriebenen, erfindungsgemäßen Kassette zum Lagern von Stableitern, wobei auf der Auflagefläche des Auflageelements ein Stapel von ungebogenen Stableitern eingerichtet ist.

Mit der Kassette können die Stableiter einfach und schonend eingelagert, sicher verwahrt und für eine Weiterverarbeitung wieder zur Verfügung gestellt werden.

Bevorzugt ist eine Variante, die dadurch gekennzeichnet ist, dass die ungebogenen Stableiter einen rechteckigen Querschnitt mit einer langen Seite und einer kurzen Seite aufweisen, und dass der Stapel so gebildet wird, dass die langen Seiten aufeinander liegen, und ein Abstand der Anlegeflächen der Breite der langen Seite entspricht.

Die Stableiter lassen sich so besonders gut aufeinander stapeln. Weiterhin lassen sich in dieser Anordnung besonders viele Stableiter übereinander stapeln. Ebenfalls ist diese Art der Stapelung vorteilhaft, wenn die Stableiter in dieser (liegenden) Position weiter verarbeitet werden sollen. Die Stableiter müssen dann nicht erst um 90° gedreht werden, sondern können direkt an die entsprechende Station (z. B. Biegestation) zur Verarbeitung übergeben werden.

Weiterhin bevorzugt ist eine alternative Variante, die dadurch gekennzeichnet ist, dass die ungebogenen Stableiter einen rechteckigen Querschnitt mit einer langen Seite und einer kurzen Seite aufweisen, und dass der Stapel so gebildet wird, dass die kurzen Seiten aufeinander liegen, und ein Abstand der Anlegeflächen der Breite der kurzen Seite entspricht.

Mit dieser Anordnung kann die Kassette schmaler ausgebildet werden, als wenn die Stableiter mit der langen Seite aufeinander liegen würden. Weiterhin ist diese Stapelung vorteilhalft, wenn die Stableiter in dieser (stehenden) Position weiter verarbeitet werden sollen. Die Stableiter müssen dann nicht erst um 90° gedreht werden, sondern können direkt an die entsprechende Station (z. B. Biegestation) zur Verarbeitung übergeben werden.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1a: zeigt in einer perspektivischen Ansicht von schräg oben eine erste Ausführungsform einer erfindungsgemäßen Kassette, mit Bodenrollen, Seitenrollen, Gleitstücken und einer Aussparung für einen RFID-Chip;
- Fig. 1b: zeigt in einer perspektivischen Ansicht von schräg unten die erfindungsgemäße Kassette aus Fig. 1a;
- Fig. 1c: zeigt in einer Seitenansicht die erfindungsgemäße Kassette aus Fig. 1a mit ausgeblendetem ersten Wandelement;
- Fig. 2a: zeigt schematisch in einer Seitenansicht eine erste Ausführungsform eines erfindungsgemäßen Stapelsystems, mit einer zweiten Ausführungsform einer erfindungsgemäßen Kassette, einer in die Kassette einragenden Hubeinrichtung, einem auf das Auflageelement aufgelegten, ungebogenen Stableiter, einem ersten Sensor und einer Steuereinrichtung;
- Fig. 2b: zeigt schematisch in einer Aufsicht das erfindungsgemäße Stapelsystem aus Fig. 2a mit Blick auf den ungebogenen Stableiter;
- Fig. 3a: zeigt schematisch in einer Seitenansicht eine zweite Ausführungsform eines erfindungsgemäßen Stapelsystems, mit einer dritten Ausführungsform einer erfindungsgemäßen Kassette, zwei in die Kassette einragende Hubeinrichtungen, vier teilweise schrägliegenden ungebogenen Stableitern, zwei Sensoren und einer Steuereinrichtung;
- Fig. 3b: zeigt schematisch in einer Seitenansicht das erfindungsgemäße Stapelsystem aus Fig. 3a, wobei eine der Hubeinrichtungen so verfahren wurde, dass der oberste Stableiter parallel zum Beladungsspalt der Kassette liegt;
- Fig. 4a: zeigt schematisch in einer Seitenansicht eine dritte Ausführungsform des erfindungsgemäßen Stapelsystems, mit einer vierten Ausführungsform einer erfindungsgemäßen Kassette, zwei an den Stirnseiten verlaufende Hubeinrichtungen, einem Auflageelement, einem Sensor und einer Automatisierungseinrichtung mit einem ungebogenen Stableiter;
- Fig. 4b: zeigt schematisch in einer Seitenansicht das erfindungsgemäße Stapelsystem aus Fig. 4a, wobei der ungebogene Stableiter auf dem Auflageelement positioniert ist;
- Fig. 4c: zeigt schematisch in einer Aufsicht einen stirnseitigen Bereich des erfindungsgemäßen Stapelsystems aus Fig. 4b;
- Fig. 4d: zeigt schematisch in einer stirnseitigen Ansicht das erfindungsgemäße Stapelsystem aus Fig. 4b;
- Fig. 4e: zeigt schematisch in einer Seitenansicht das erfindungsgemäße Stapelsystem aus Fig. 4a, wobei die Kassette vollständig mit einem Stapel von ungebogenen Stableitern befüllt ist;
- Fig. 5: zeigt schematisch in einer Seitenansicht eine vierte Ausführungsform eines erfindungsgemäßen Stapelsystems, mit einer fünften Ausführungsform einer erfindungsgemäßen Kassette, in die ein Teilerelement eingesetzt und an der ein RFID-Chip angebracht ist, sowie einer Hubeinrichtung;
- Fig. 6a: zeigt schematisch in einer stirnseitigen Schnittansicht eine fünfte Ausführungsform eines erfindungsgemäßen Stapelsystems, mit einer sechsten Ausführungsform einer erfindungsgemäßen Kassette und einem Stapel ungebogener Stableiter, bei denen die langen Seiten aufeinander liegen;
- Fig. 6b: zeigt schematisch in einer stirnseitigen Schnittansicht eine sechste Ausführungsform eines erfindungsgemäßen Stapelsystems, mit einer siebten Ausführungsform einer erfindungsgemäßen Kassette und einem Stapel ungebogener Stableiter, bei denen die kurzen Seiten aufeinander liegen;
- Fig. 7: zeigt schematisch eine Ausführungsform einer erfindungsgemäßen Fertigungsanlage für Stableiter mit einer Fertigungsstation, einem ersten erfindungsgemäßen Stapelsystem, einem Zwischenlager, einem zweiten erfindungsgemäßen Stapelsystem und mehreren Biegestationen.

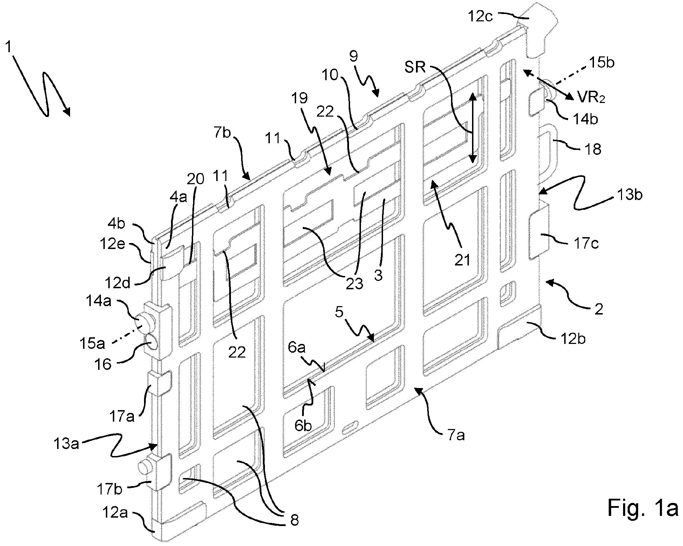

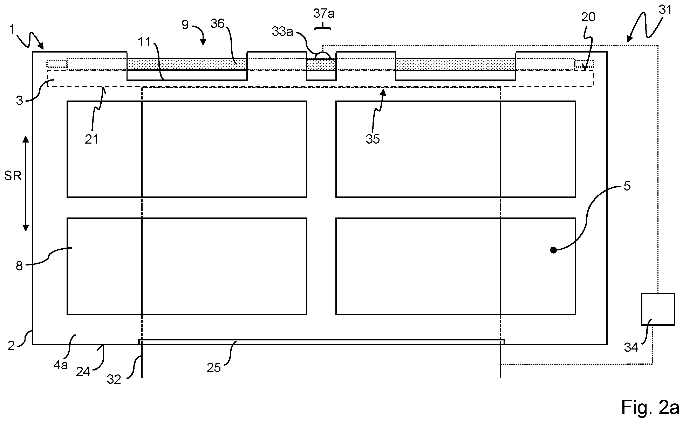

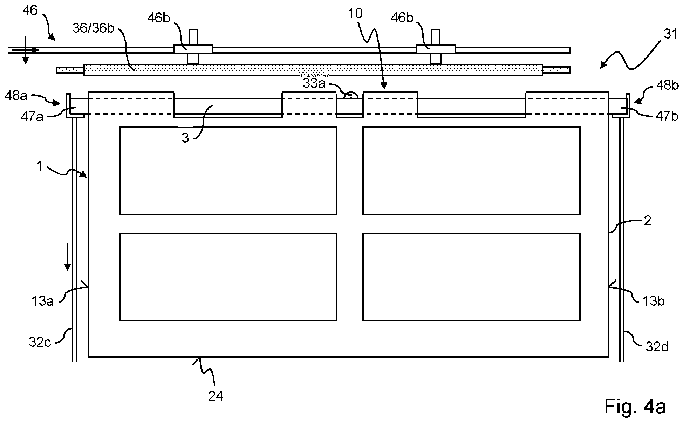

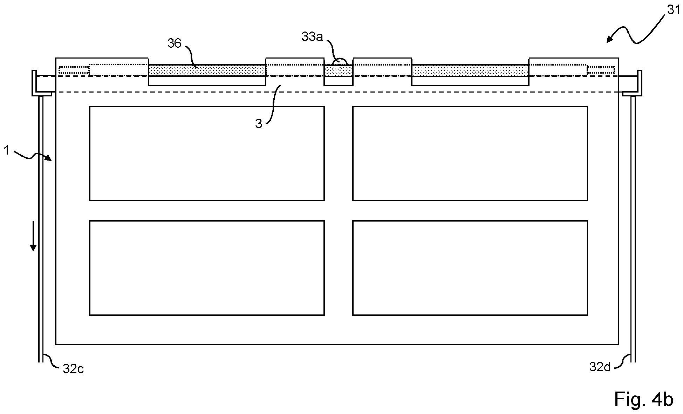

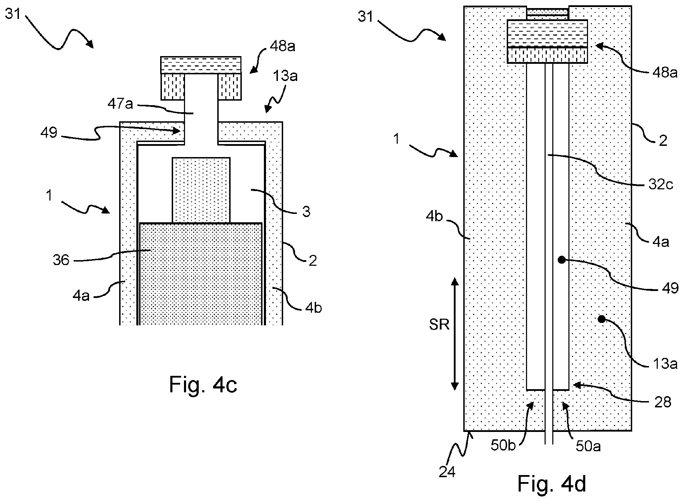

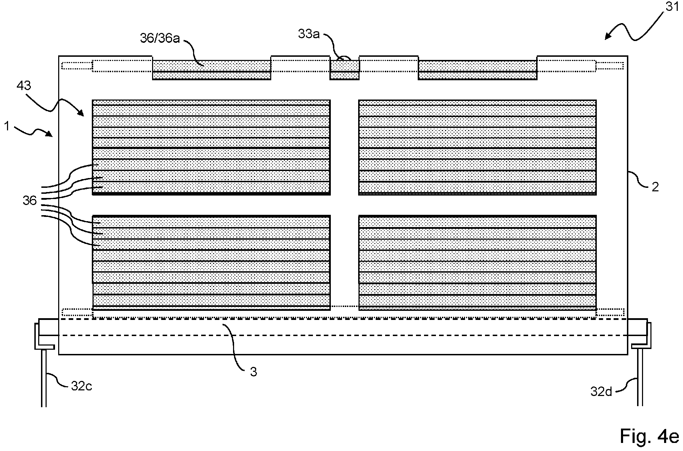

**Fig. 1a** zeigt eine erste Ausführungsform einer erfindungsgemäßen Kassette 1 zur Lagerung eines Stapels von ungebogenen Stableitern (zur Lagerung siehe beispielsweise Fig. 2a oder Fig. 4). Die Kassette 1 ist in einer perspektivischen Ansicht von schräg oben gezeigt. Die Kassette 1 umfasst einen Kassettenrahmen **2** und ein Auflageelement **3.**

Der Kassettenrahmen 2 wird durch ein erstes Wandelement **4a** und ein zweites Wandelement **4b** ausgebildet. Das erste Wandelement 4a und das zweite Wandelement 4b stehen einander parallel gegenüber. Zwischen den Wandelementen 4a, 4b ist ein Zwischenraum **5** ausgebildet. Der Zwischenraum 5 wird durch eine innenliegende, erste Anlegefläche **6a** des ersten Wandelements 4a und durch eine innenliegende, zweite Anlegefläche **6b** des zweiten Wandelements 4b begrenzt. Die erste Anlegefläche 6a und die zweite Anlegefläche 6b stehen einander parallel gegenüber.

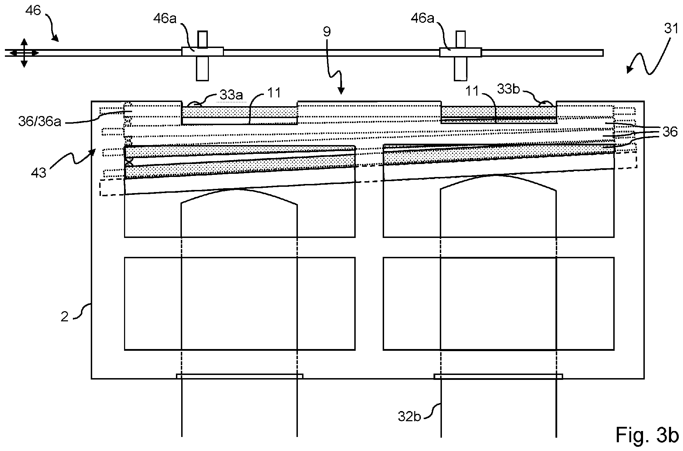

An einer erste Hauptseite **7a** ("Vorderseite") des Kassettenrahmens 2 und einer zweiten Hauptseite **7b** ("Rückseite") des Kassettenrahmens 2 weist der Kassettenrahmen 2 in der hier gezeigten Ausführungsform eine Vielzahl von Durchbrüchen **8** auf. Die Hauptseiten 7a, 7b verlaufen parallel zu den Anlegeflächen 6a, 6b. Weiterhin weist der Kassettenrahmen 2 an einer Beladungsseite **9** ("Oberseite") einen Beladungsspalt **10** auf. Über den Beladungsspalt 10 können ungebogene Stableiter in die Kassette 1 eingelegt werden (siehe Fig. 4a) oder aus der Kassette 1 entnommen werden (siehe Fig. 3b). Erfindungsgemäß weisen die Wandelemente 4a, 4b an der Beladungsseite 9 mehrere zurückgesetzte Rücksprünge **11** auf. Die Rücksprünge 11 erstrecken sich beiderseits des Beladungsspalts 10.

In der hier gezeigten Ausführungsform sind an den Außenseiten der Wandelemente 4a, 4b an den Ecken Gleitstücke **12a-12e** angeordnet. Die Gleitstücke 12a-12c erstrecken sich jeweils über beide Wandelemente 4a, 4b. Das Gleitstück 12d ist an Wandelement 4a angeordnet und das Gleitstück 12e ist an Wandelement 4b angeordnet. Mittels der Gleitstücke 12a-12e kann der Kassettenrahmen 2 außen entlang einer Gleitführung (nicht näher dargestellt) geführt werden.

Der Kassettenrahmen 2 weist weiterhin eine erste Stirnseite **13a** und eine zweite Stirnseite **13b** auf. Die Stirnseiten 13a, 13b verlaufen senkrecht zu den Anlegeflächen 6a, 6b der Wandelemente 4a, 4b. An der Stirnseite 13a ist eine erste Seitenrolle **14a** und an der Stirnseite 13b eine zweite Seitenrolle **14b** angeordnet. An den Seitenrollen 14a, 14b kann die Kassette 1 beispielsweise in einem Zwischenlager an einer Rollführung aufgehängt und verfahren werden. Die Achsen **15a, 15b** der Seitenrollen 14a, 14b sind so ausgerichtet, dass die Kassette 1 entlang einer zweiten Verfahrrichtung **VR₂** verfahren werden kann; die Achsen 15a, 15b verlaufen hier parallel zu den Hauptseiten 7a, 7b bzw. den Anlegeflächen 6a, 6b, und senkrecht zu den Stirnseiten 13a, 13b. Die zweite Verfahrrichtung VR₂ verläuft senkrecht zu den Anlegeflächen 6a, 6b. Unterhalb der ersten Seitenrolle 14a ist eine Chip-Vertiefung **16** für einen RFID-Chip ausgebildet. In der hier gezeigten Ausführungsform weist der Kassettenrahmen 2 zudem drei weitere Rahmenelemente **17a-17c,** sowie ein Griffelement **18** zum einfacheren Ergreifen der Kassette 1 auf.

Das Auflageelement 3 befindet sich in der gezeigten Ausführungsform etwas unterhalb des Beladungsspalts 10. An einer Oberseite **19** bildet das Auflageelement 3 eine (hier mehrteilige) Auflagefläche **20** aus. Auf der Auflagefläche 20 können ungebogene Stableiter positioniert werden. Das Auflageelement 3 ist hier an einer Unterseite **21** des Auflageelements 3 für eine Hubeinrichtung (nicht dargestellt, vgl. aber z. B. Fig. 2a) zugänglich. Mittels der Hubeinrichtung kann das Auflageelement 3 im Zwischenraum 5 entlang einer Stapelrichtung **SR** verschoben werden. Das Auflageelement 3 wird dabei zwischen den Wandelementen 4a, 4b verfahren.

Das Auflageelement 3 weist in der hier gezeigten Ausführungsform mehrere zurückgesetzte Auflage-Rücksprünge **22,** sowie mehrere Auflage-Durchbrüche **23** auf. Die Form und Position der Auflage-Rücksprünge 22 des Auflageelements 3 entspricht dabei der Form und Position der zurückgesetzten Rücksprünge 11 der Wandelemente 4a, 4b.

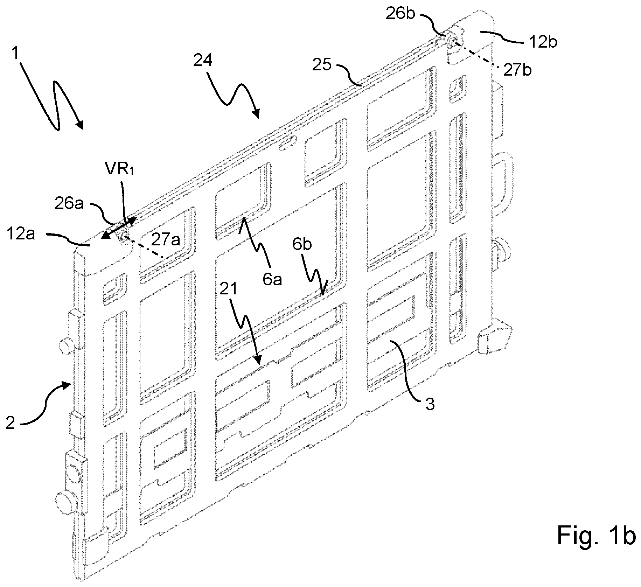

**Fig. 1b** zeigt die erfindungsgemäßen Kassette 1 aus Fig. 1a in einer perspektivischen Ansicht von schräg unten.

Der Kassettenrahmen 2 weist an einer Bodenseite **24** eine Betätigungsöffnung **25** auf. Über die Betätigungsöffnung 25 kann eine externe Hubeinrichtung (nicht dargestellt, siehe z. B. Fig. 2a) in die Kassette 1 eingeführt werden, um somit das Auflageelement 3 zu verfahren. Dabei greift die externe Hubeinrichtung an der Unterseite 21 des Auflageelements 3 am Auflageelement 3 an. Das Auflageelement 3 wird also von der externen Hubeinrichtung untergriffen.

Weiterhin weist der Kassettenrahmen 2 an der Bodenseite 24 eine erste Bodenrolle **26a** im Bereich von Gleitstück 12a und eine zweite Bodenrolle **26b** im Bereich von Gleitstück 12b auf. Die Achsen **27a, 27b** der Bodenrollen 26a, 26b sind so ausgerichtet, dass die Kassette 1 entlang einer ersten Verfahrrichtung **VR₁** verfahren werden kann. Die Achsen 27a, 27b verlaufen senkrecht zu den Hauptseiten bzw. den Anlegeflächen 6a, 6b und parallel zu den Stirnseiten der Kassette 1. Die erste Verfahrrichtung VR₁ verläuft parallel zu den Anlegeflächen 6a, 6b.

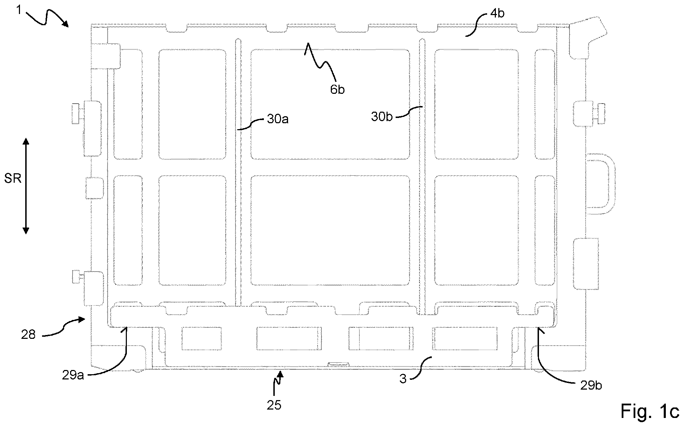

**Fig. 1c** zeigt die erfindungsgemäßen Kassette 1 aus Fig. 1a in einer Seitenansicht. Das erste Wandelement wurde für einen besseren Blick auf das Innere der Kassette 1 ausgeblendet, womit ein freier Blick auf das zweite Wandelement 4b und das Auflageelement 3 ermöglicht wird.

In der hier gezeigten Ausführungsform wurde das Auflageelement 3 in eine unterste Position **28** bezüglich der Stapelrichtung SR nahe der Betätigungsöffnung 25 verschoben. Das Auflageelement 3 liegt hier auf zwei Auflagekanten **29a, 29b** auf. Die Auflagekanten 29a, 29b geben die unterste Position 28 für das Auflageelement 3 vor und verhindern, dass das Auflageelement 3 aus der Betätigungsöffnung 25 hinausfällt, wenn die externe Hubeinrichtung das Auflageelement 3 nicht untergreift.

Weiterhin sind in der hier gezeigten Ausführungsform auf der zweiten Anlegefläche 6b des zweiten Wandelements 4b zwei Auflage-Gleitführungen **30a, 30b** ausgebildet. Das Auflageelement 3 kann entlang dieser Auflage-Gleitführungen 30a, 30b stabil und gleichmäßig auf- und abbewegt werden.

**Fig. 2a** zeigt in einer Seitenansicht schematisch eine erste Ausführungsform eines erfindungsgemäßen Stapelsystems **31.** Das Stapelsystem 31 umfasst eine zweite Ausführungsform der erfindungsgemäßen Kassette 1, eine externe Hubeinrichtung **32,** einen ersten Sensor **33a** und eine Steuereinrichtung **34.**

Die Kassette 1 umfasst den Kassettenrahmen 2, der durch das erste Wandelement 4a und das zweite Wandelement, welches in der hier gezeigten Ansicht vom ersten Wandelement 4a vollständig verdeckt ist, ausgebildet ist. Das erste Wandelement 4a und das zweite Wandelement weisen jeweils vier Durchbrüche 8 und an der Beladungsseite 9 jeweils drei zurückgesetzte Rücksprünge 11 auf. Weiterhin umfasst die Kassette 1 das Auflageelement 3 (die von Wandelement 4a verdeckten Bereiche sind gestrichelt dargestellt).

Die externe Hubeinrichtung 32 greift in die Betätigungsöffnung 25 an der Bodenseite 24 des Kassettenrahmens 2 ein (die von Wandelement 4a verdeckten Bereiche sind gestrichelt dargestellt). Die externe Hubeinrichtung 32 untergreift das Auflageelement 3 mittels eines Schwertelements **35** an der Unterseite 21 des Auflageelements 3. Das Schwertelement 35 wurde durch die Betätigungsöffnung 25 in den Zwischenraum 5 zwischen dem ersten Wandelement 4a und dem zweiten Wandelement eingeführt. Die externe Hubeinrichtung 32 ist hier so ausgebildet, dass sie das Auflageelement 3 über eine Länge des Auflageelements 3 von ungefähr 70% mit einer geraden Auflagekante des Schwertelements 35 untergreift. Hierdurch kann ein sicheres Untergreifen und Verschieben des Auflageelements 3 zwischen den Wandelementen 4a entlang der Stapelrichtung SR erreicht werden.

Das Auflageelement 3 ist hier als ein Auflageelement 3 ohne Auflage-Rücksprünge oder Auflage-Durchbrüche ausgebildet. Das Auflageelement 3 ist nahe an die Beladungsseite 9 des Kassettenrahmens 2 verfahren. Auf der Auflagefläche 20 des Auflageelements 3 ist ein ungebogener Stableiter **36** (die von Wandelement 4a verdeckten Bereiche sind gepunktet dargestellt) angeordnet. Der ungebogene Stableiter 36 wurde über den Beladungsspalt auf der Beladungsseite 9 in die Kassette 1 eingelegt.

In der hier gezeigten Ausführungsform umfasst das Stapelsystem 31 weiterhin den ersten Sensor 33a und die Steuereinrichtung 34. Mittels des ersten Sensors 33a wird die Verfahrposition der Auflagefläche 20 des Auflageelements 3 und/oder des (obersten) ungebogenen Stableiters 36 bezüglich der Stapelrichtung SR relativ zur Ebene der Beladungsseite 9 überprüft. Der erste Sensor 33a ist hier so ausgebildet, dass er in einem Bereich **37a** die Verfahrposition überprüfen kann. Der erste Sensor 33a ist hier als Lichtunterbrechungssensor ausgebildet.

Die externe Hubeinrichtung 32 und der erste Sensor 33a sind mit der Steuereinrichtung 34 verbunden. Der erste Sensor 33a gibt die Informationen über die Verfahrposition der Auflagefläche 20 des Auflageelements 3 oder des (obersten) ungebogenen Stableiters 36 auf der Auflagefläche 20 des Auflageelements 3 an die Steuereinrichtung 34 weiter. Die Steuereinrichtung 34 steuert dann die externe Hubeinrichtung 32. Wenn die Kassette 1 mit ungebogenen Stableitern 36 beladen werden soll, wird die externe Hubeinrichtung 32 durch ein Kommando der Steuereinrichtung 34 schrittweise abgesenkt, sodass der nächste ungebogenen Stableiter 36 sicher auf das Auflageelement 3 oder einen zuvor eingelegten, obersten ungebogenen Stableiter 36 aufgelegt und in die Kassette 1 eingelegt werden können. Wenn die ungebogenen Stableiter 36 aus der Kassette 1 entnommen werden sollen, wird die externe Hubeinrichtung 32 durch ein Kommando der Steuereinrichtung 34 schrittweise angehoben, sodass die jeweils obersten ungebogenen Stableiter 36 sicher aus der Kassette 1 entnommen werden können.

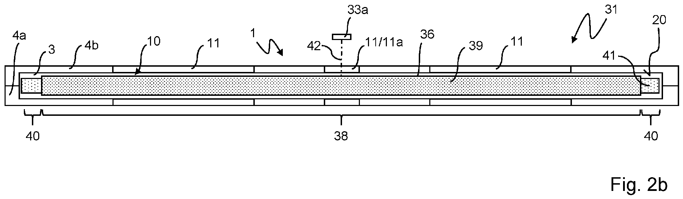

**Fig. 2b** zeigt das erfindungsgemäße Stapelsystem 31 aus Fig. 2a in einer schematischen Aufsicht. Die Steuereinrichtung ist der Übersichtlichkeit halber nicht dargestellt.

In der Aufsicht ist die Kassette 1 mit dem Auflageelement 3, den Wandelementen 4a, 4b, dem Beladungsspalt 10 und den Rücksprüngen 11 gezeigt. Auf der Auflagefläche 20 des Auflageelements 3 ist der ungebogene Stableiter 36 aufgelegt.

Der ungebogene Stableiter 36 umfasst einen isolierten Stableiterteil **38** mit einer Isolationsschicht **39** (stark gepunktete Fläche) und zwei abisolierte Stableiterteile **40,** bei denen Kerne **41** (schwach gepunktete Fläche) des ungebogenen Stableiters 36 freiliegen. In der hier gezeigten Ausführungsform wurde die Abisolation mittels Schneidwerkzeugen vorgenommen. Die abisolierten Stableiterteile 40 haben etwas kleinere Abmessungen als der isolierte Stableiterteil 38, da in den abisolierten Stableiterteilen 40 die Isolationsschicht 39 abgetragen wurde, um die Kerne 41 freizulegen. Der ungebogene Stableiter 36 kann beispielsweise aus einem isolierten Kupferflachdraht gefertigt werden. Entsprechend wäre der Kern 41 dann ein Kupferkern. Die Isolationsschicht 39 kann beispielsweise aus einem Kunststoff bestehen.

Der erste Sensor 33a ist seitlich der Kassette 1 angeordnet. Vom ersten Sensor 33a geht ein Messstrahl **42** aus. Der Messstrahl 42 passiert einen mittleren Rücksprung **11a** der zurückgesetzten Rücksprünge 11 und wird in der hier gezeigten Ausführungsform vom ungebogenen Stableiter 36 unterbrochen.

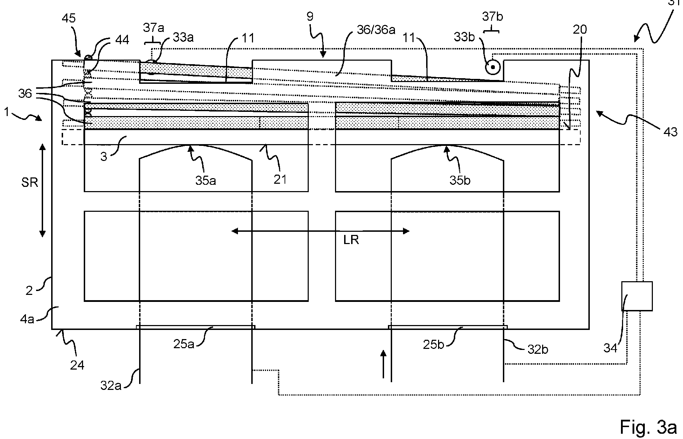

**Fig. 3a** zeigt in einer Seitenansicht schematisch eine zweite Ausführungsform des erfindungsgemäßen Stapelsystems 31. Das Stapelsystem 31 umfasst eine dritte Ausführungsform der erfindungsgemäßen Kassette 1, zwei Hubeinrichtungen **32a, 32b,** zwei Sensoren 33a, **33b** und die Steuereinrichtung 34.

Die in Fig. 3a gezeigte Kassette 1 ist ähnlich ausgebildet wie die Kassette 1 aus Fig. 2a. Aus diesem Grund werden hier nur die Unterschiede näher erläutert. Das erste Wandelement 4a und das zweite Wandelement weisen hier an der Beladungsseite 9 jeweils zwei zurückgesetzte Rücksprünge 11 auf.

Die Schwertelemente **35a, 35b** der beiden Hubeinrichtung 32a, 32b wurden in die beiden Betätigungsöffnungen **25a, 25b** an der Bodenseite 24 des Kassettenrahmens 2 eingeführt. Die Hubeinrichtungen 32a, 32b untergreifen das Auflageelement 3 mittels der Schwertelemente 35a, 35b an der Unterseite 21 des Auflageelements 3 an unterschiedlichen Stellen entlang einer Längsrichtung **LR** des Kassettenrahmens 2. Die Längsrichtung LR ist senkrecht zur Stapelrichtung SR und parallel zu den Anlegeflächen. Die Schwertelemente 35a, 35b weisen hier abgerundete Auflagekanten auf. Weiterhin sind die beiden Hubeinrichtung 32a, 32b so weit in Längsrichtung LR voneinander beabstandet, dass die Berührpunkte der Schwertelemente 35a, 35b am Auflageelement 3 wenigstens einen Abstand gleich groß oder größer als die halbe Länge des Auflageelement 3 in Längsrichtung LR haben.

Das Auflageelement 3 ist nahe an die Beladungsseite 9 des Kassettenrahmens 2 verfahren. Auf der Auflagefläche 20 des Auflageelements 3 bilden vier ungebogene Stableiter 36 den Stapel 43. Die Abisolation der ungebogenen Stableiter 36 wurde hier mittels einer Laservorrichtung vorgenommen.

Beim Abisolieren der ungebogenen Stableiter 36 mittels einer Laservorrichtung kann es an einem Ende des Stableiters 36 zu Isolationsmaterial-Ansammlungen **44** an den Übergangsbereichen **45** der ungebogenen Stableiter 36 zwischen dem isolierten Stableiterteil und dem abisolierten Stableiterteil kommen. Die Isolationsmaterial-Ansammlungen 44 führen dann dazu, dass die ungebogenen Stableiter 36 nicht mehr flach aufeinander liegen, sondern sich mit zunehmender Stapelhöhe eine merkliche Schräglage eines obersten (ungebogenen) Stableiters **36a** gegenüber der Auflagefläche 20 aufbaut. Man beachte, dass die Isolationsmaterial-Ansammlungen 44 hier schematisch und besonders groß dargestellt sind, um die Schräglage des Stapels 43 besser zu verdeutlichen. Betrachtet man hier beispielsweise den obersten Stableiter 36a des Stapels 43, erkennt man, dass der erste Sensor 33a nahezu vollständig vom obersten Stableiter 36a verdeckt ist. Der zweite Sensor 33b liegt hingegen frei vor und ist vom obersten Stableiter 36a beabstandet.

Neben dem ersten Sensor 33a umfasst die hier gezeigte Ausführungsform des Stapelsystem 31 wie bereits erwähnt einen zweiten Sensor 33b. Der erste Sensor 33a ist so ausgebildet, dass er im Bereich 37a die Verfahrposition überprüfen kann. Der zweite Sensor 33b ist so ausgebildet, dass er in einem Bereich **37b** die Verfahrposition überprüfen kann. Durch das Zusammenspiel beider Sensoren 33a, 33b kann die Verfahrposition und die Orientierung der Auflagefläche 20 des Auflageelements 3 und der ungebogenen Stableiters 36 bezüglich der Stapelrichtung SR relativ zur Ebene der Beladungsseite 9 überprüft werden.

Die Hubeinrichtungen 32a, 32b und die Sensoren 33a, 33b sind mit der Steuereinrichtung 34 verbunden. Die Sensoren 33a, 33b geben die Informationen über die Verfahrposition und die Orientierung der Auflagefläche 20 des Auflageelements 3 oder der ungebogenen Stableiter 36 auf der Auflagefläche 20 des Auflageelements 3 an die Steuereinrichtung 34 weiter. Die Steuereinrichtung 34 steuert dann die Hubeinrichtungen 32a, 32b. In der gezeigten Ausführungsform erhält die Steuereinrichtung 34 von den Sensoren 33a, 33b die Information, dass der oberste Stableiter 36a eine unerwünschte (gegenüber der Ebene des Beladungsspalts bzw. der Beladungsseite 9 schräge) Orientierung hat, sodass eine Automatisierungseinrichtung den obersten Stableiter 36a nicht sicher entnehmen können wird. Die Steuereinrichtung 34 gibt dann den Steuerbefehl aus, dass die Hubeinrichtung 33b angehoben wird (verdeutlicht durch den Pfeil neben Hubeinrichtung 33b), und Hubeinrichtung 33a in ihrer aktuellen Stellung verbleibt.

**Fig. 3b** zeigt das erfindungsgemäße Stapelsystem 31 aus Fig. 3a zu einem späteren Zeitpunkt. Die Steuereinrichtung ist der Übersichtlichkeit halber nicht dargestellt.

Die Hubeinrichtung 32b wurde angehoben, sodass der oberste Stableiter 36a des Stapels 43 an Stableitern 36 parallel zur Ebene der Beladungsseite 9 des Kassettenrahmens 2 ausgerichtet ist. Das Auflageelement 3 liegt dann etwas schräg in der Kassette. Zur Entnahme des obersten Stableiters 36a kann dann die Automatisierungseinrichtung **46,** die hier zwei Greifvorrichtungen **46a** zum Ergreifen des obersten Stableiters 36a aufweist, eingesetzt werden.

Man beachte, dass die Sensoren 33a, 33b in der gezeigten Ausführungsform im Randbereich der zurückgesetzten Rücksprünge 11 angeordnet sind. Auf diese Weise kann eine Kollision zwischen den Sensoren 33a, 33b und der Automatisierungseinrichtung 46 und deren Greifvorrichtungen 46a (welche bevorzugt mittig in den Rücksprüngen angreifen), beim Einlegen oder Entnehmen von Stableitern 36 verhindert werden.

**Fig. 4a** zeigt in einer Seitenansicht schematisch eine dritte Ausführungsform des erfindungsgemäßen Stapelsystems 31. Das Stapelsystem 31 umfasst eine vierte Ausführungsform der erfindungsgemäßen Kassette 1, die seitlich angreifenden Hubeinrichtungen **32c, 32d** und den ersten Sensor 33a. Die Steuereinrichtung ist der Übersichtlichkeit halber nicht dargestellt.

Die in Fig. 4a gezeigte Kassette 1 ist ähnlich ausgebildet wie die Kassette 1 aus Fig. 2a. Aus diesem Grund werden hier nur die Unterschiede näher erläutert. Der Kassettenrahmen 2 ist hier an der Bodenseite 24 geschlossen. An den Stirnseiten 13a, 13b des Kassettenrahmens 2 sind Seitenöffnungen (siehe hierzu Bezugszeichen 49 in Fig. 4c oder 4d) ausgebildet, durch welche Auflageelement-Fortsätze **47a, 47b** des Auflageelements 3 hindurchreichen. Die Auflageelement-Fortsätze 47 liegen hier auf Hubelement-Auflegern **48a, 48b** der hier seitlich bei den Stirnseiten 13a, 13b des Kassettenrahmens 2 angeordneten Hubeinrichtungen 32c, 32d auf.

Das Auflageelement 3 ist über die Hubeinrichtungen 32c, 32d nahe an den Beladungsspalt 10 verfahren. Diese Position ist geeignet, um einen nächsten Stableiter **36b** auf dem Auflageelement 3 abzulegen. Der erste Sensor 33a liefert die Information, dass der ungebogene Stableiter 36, der zugleich auch der nächste Stableiter 36b ist, auf dem Auflageelement 3 platziert werden kann. Die Automatisierungseinrichtung 46 führt dann den nächsten Stableiter 36b heran. Die Automatisierungseinrichtung 46, die hier zwei Saugvorrichtungen **46b** zum Ansaugen des ungebogenen Stableiters 36 aufweist, wird zur Kassette 1 über den Beladungsspalt 10 hin verfahren. Der ungebogene Stableiter 36 kann dann auf dem Auflageelement 3 platziert werden. Die Hubeinrichtungen 32c, 32d werden hier parallel zueinander (gleichlaufend) verfahren. Alternativ können auch zwei Sensoren an unterschiedlichen Positionen in Längsrichtung und eine separate Ansteuerung der beiden Hubeinrichtungen zum Ausgleich von Schräglagen vorgesehen sein (nicht näher dargestellt).

**Fig. 4b** zeigt das erfindungsgemäße Stapelsystem 31 aus Fig. 4a zu einem späteren Zeitpunkt.

Der ungebogene Stableiter 36 wurde auf dem Auflageelement 3 abgelegt. Die Automatisierungseinrichtung wurde von der Kassette 1 weg verfahren, um beispielsweise einen weiteren ungebogenen Stableiter 36 heranzutransportieren. Das Auflageelement 3 mit dem aufgelegten ungebogenen Stableiter 36 wurde mittels der Hubeinrichtungen 32c, 32d soweit abgesenkt, dass der erste Sensor 33a wieder die Information liefert, dass ein weiterer ungebogenen Stableiter 36 auf dem Auflageelement 3 platziert werden kann.

**Fig. 4c** zeigt schematisch in einer Aufsicht das erfindungsgemäße Stapelsystem 31 aus Fig. 4b im Bereich der Stirnseite 13a des Kassettenrahmens 2 der Kassette 1.

An der Stirnseite 13a des Kassettenrahmens 2 ist zwischen den Wandelementen 4a, 4b die Seitenöffnung **49** ausgebildet. Durch die Seitenöffnung 49 hindurch reicht der Auflageelement-Fortsatz 47a des Auflageelements 3. Der Auflageelement-Fortsatz 47a liegt auf dem Hubelement-Aufleger 48a auf. Der Auflageelement-Fortsatz 47a weist eine geringere Breite als der Rest des Auflageelements 3 auf. Der Kassettenrahmen 2 ist weiterhin so ausgebildet, dass nur der Auflageelement-Fortsatz 47 durch die Seitenöffnung 49 passt (nicht jedoch der Rest des Auflageelements 3, und auch nicht der abisolierte Teil des Stableiters 36). Auf diese Weise kann verhindert werden, dass das Auflageelement 3 (oder ein Teil des Stableiters 36) seitlich aus dem Kassettenrahmen 2 herausrutscht. Auf dem Auflageelement 3 angeordnet ist der ungebogene Stableiter 36.

**Fig. 4d** zeigt schematisch in einer stirnseitigen Ansicht das erfindungsgemäße Stapelsystem 31 aus Fig. 4b im Bereich der Stirnseite 13a des Kassettenrahmens 2 der Kassette 1 mit der Hubeinrichtung 32c.

Die Seitenöffnung 49 zwischen den Wandelementen 4a, 4b erstreckt sich nicht über die gesamte Länge (in Stapelrichtung SR) des Kassettenrahmens 2. An der untersten Position 28 für das Auflageelement (das Auflageelement ist hier durch den Hubelement-Aufleger 48a und den Kassettenrahmen 2 verdeckt) kann das Auflageelement auf Ausbuchtungen **50a, 50b** der Wandelemente 4a, 4b abgelegt werden. Die Ausbuchtungen 50a, 50b bilden zusammen einen die Wandelemente 4a, 4b verbindenden Steg an der Stirnseite 13a aus. Die Ausbuchtungen 50a, 50b verhindern, dass das Auflageelement an der Bodenseite 24 des Kassettenrahmens 2 aus der Kassette 1 herausrutscht.

**Fig. 4e** zeigt das erfindungsgemäße Stapelsystem 31 aus Fig. 4a zu einem späteren Zeitpunkt, zu dem die Kassette 1 vollständig mit ungebogenen Stableitern 36 beladen ist.

Die Hubeinrichtungen 32c, 32d wurden soweit abgesenkt, dass das Auflageelement 3 auf den Ausbuchtungen des Kassettenrahmens 2 aufliegt. Es können keine weiteren ungebogenen Stableiter 36 mehr in die Kassette 1 eingelegt werden. Der erste Sensor 33a ist großteils vom obersten Stableiter 36a verdeckt.

Der Stapel 43 von ungebogenen Stableitern 36 wurde auf einfache und schonende Weise in der Kassette 1 eingelagert und kann nun sicher verwahrt oder direkt für eine Weiterverarbeitung der ungebogenen Stableiter 36 bereitgestellt werden.

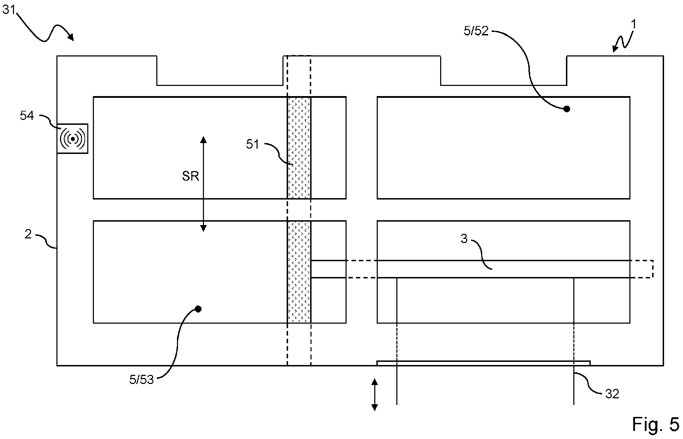

**Fig. 5** zeigt in einer Seitenansicht schematisch eine vierte Ausführungsform des erfindungsgemäßen Stapelsystems 31. Das Stapelsystem 31 umfasst eine fünfte Ausführungsform der erfindungsgemäßen Kassette 1 und eine externe Hubeinrichtung 32.

Die in Fig. 5 gezeigte Kassette ist ähnlich ausgebildet wie die Kassette 1 aus Fig. 3a. Aus diesem Grund werden hier nur die wesentlichen Unterschiede näher erläutert. In die Kassette 1 ist ein Teilerelement **51** zwischen den Wandelementen eingesetzt. Das Teilerelement 51 ist reversibel in den Kassettenrahmen 2 einfügbar. Das Teilerelement 51 erstreckt sich in Stapelrichtung SR. Mittels des Teilerelements 51 wird der Zwischenraum 5 in der Kassette 1 aufgeteilt. Der Zwischenraum 5 wird in einen Nutzteil **52** und einen Nicht-Nutzteil **53** aufgeteilt.

Im Nutzteil 52 ist das Auflageelement 3 angeordnet. Das Auflageelement 3 wird über die externe Hubeinrichtung 32 untergriffen. Das Auflageelement 3 kann dann mittels der externen Hubeinrichtung 32 im Nutzteil 52 in Stapelrichtung SR verschoben werden. Im Nicht-Nutzteil 53 sind keine weiteren Strukturen angeordnet. Am Kassettenrahmen 2 ist hier weiterhin ein RFID-Chip **54** angeordnet, mit dem die Kassette 1 und die darin gelagerten, ungebogenen Stableiter nachverfolgt und identifiziert werden können.

Durch den Einsatz des Teilerelements 51 kann der Zwischenraum 5 in der Kassette 1 verkleinert werden. Auf diese Weise können auch kürzere, ungebogene Stableiter sicher in der Kassette 1 verwahrt und transportiert werden.

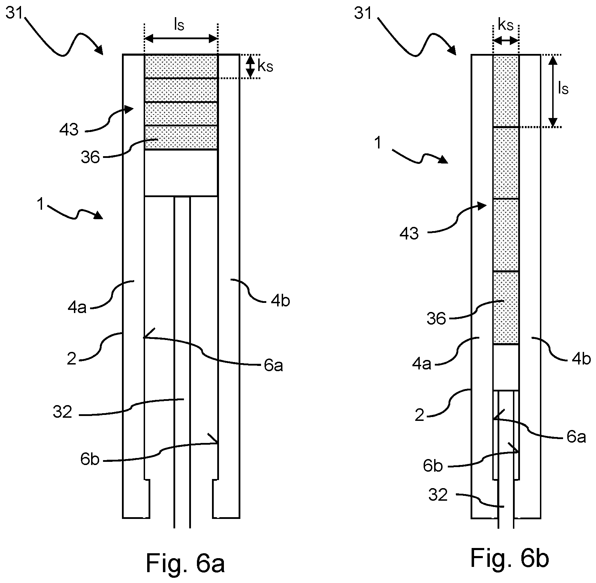

**Fig. 6a** zeigt in einer stirnseitigen Schnittansicht schematisch eine fünfte Ausführungsform des erfindungsgemäßen Stapelsystems 31. Das Stapelsystem 31 umfasst eine fünfte Ausführungsform der erfindungsgemäßen Kassette 1 sowie die externe Hubeinrichtung 32.

In die Kassette 1 ist der Stapel 43 von ungebogenen Stableiter 36 eingelegt. Die ungebogenen Stableiter 36 weisen eine lange Seite **l_{S}** und eine kurze Seite **k_{S}** auf.

Die ungebogenen Stableiter 36 weisen also einen rechteckigen Querschnitt auf. Die ungebogenen Stableiter 36 sind in der hier gezeigten Ausführungsform so gestapelt, dass die langen Seiten l_{S} der ungebogenen Stableiter 36 aufeinander liegen. Der Kassettenrahmen 2 mit den Wandelementen 4a, 4b wurde so angepasst, dass die Anlegeflächen 6a, 6b der Wandelemente 4a, 4b so weit voneinander beabstandet sind, sodass der Abstand zwischen den Wandelementen 4a, 4b der Breite der langen Seite l_{S} der ungebogenen Stableiter 36 entspricht (mit ausreichendem Spiel).

**Fig. 6b** zeigt in einer stirnseitigen Schnittansicht schematisch eine sechste Ausführungsform des erfindungsgemäßen Stapelsystems 31. Das Stapelsystem 31 umfasst eine siebte Ausführungsform der erfindungsgemäßen Kassette 1 sowie die externe Hubeinrichtung 32.

In die Kassette 1 ist der Stapel 43 von ungebogenen Stableitern 36 eingelegt. Die ungebogenen Stableiter 36 weisen wiederum die lange Seite l_{S} und die kurze Seite k_{S} auf. Die ungebogenen Stableiter 36 sind in der hier gezeigten Ausführungsform so gestapelt, dass die kurzen Seiten k_{S} der ungebogenen Stableiter 36 aufeinander liegen. Der Kassettenrahmen 2 mit den Wandelementen 4a, 4b wurde so angepasst, dass die Anlegeflächen 6a, 6b der Wandelemente 4a, 4b so weit voneinander beabstandet sind, sodass der Abstand zwischen den Wandelementen 4a, 4b der Breite der kurzen Seite k_{S} der ungebogenen Stableiter 36 entspricht (mit ausreichendem Spiel).

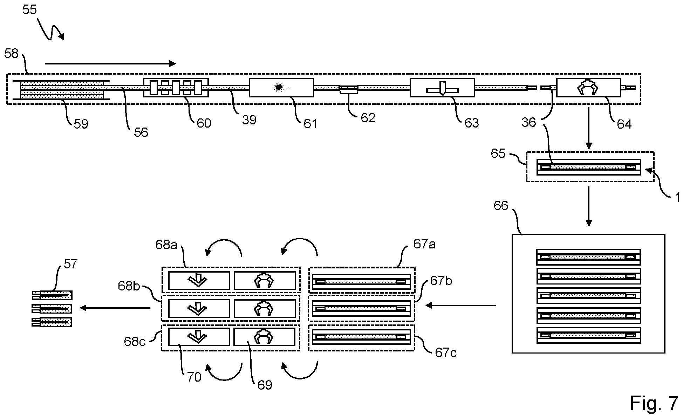

**Fig. 7** zeigt schematisch eine erfindungsgemäße Fertigungsanlage **55,** mit der aus einem Bandmaterial **56** ungebogene Stableiter 36 hergestellt werden, die ungebogenen Stableiter 36 eingelagert (zwischengelagert) werden und die ungebogenen Stableiter 36 zu gebogenen Stableiter **57** weiterverarbeitet werden. Die Fertigungsanlage 55 umfasst mehrere Abschnitte.

In einer Fertigungsstation **58** werden die ungebogenen Stableiter 36 gefertigt. In der gezeigten Ausführungsform wird hierzu das Bandmaterial 56 (beispielsweise ein isolierter Kupferflachdraht) von eine Bandmaterialrolle **59,** auf der das Bandmaterial 56 aufgerollt ist, abgerollt. Das Bandmaterial 56 wird zu einer Richteinrichtung **60** geführt. In der Richteinrichtung 60 wird das Bandmaterial 56 so ausgerichtet, dass es gerade ist und somit keine ungewollten Biegungen im später gefertigten, ungebogenen Stableiter 36 vorliegen.

Das Bandmaterial 56 wird dann zu einer Abisoliereinrichtung **61** geführt. In der Abisoliereinrichtung 61 wird die Isolationsschicht 39 des Bandmaterials 56 teilweise entfernt, das Bandmaterial 56 also teilweise abisoliert. Das Bandmaterial 56 weist nach dem Abisolieren einen abisolierten Bandmaterialteil **62** auf. Das Abisolieren erfolgt hier mittels eines Lasers.

Das teilweise abisolierte Bandmaterial 56 wird dann zu einer Schneideinrichtung **63** geführt. In der Schneideinrichtung 63 wird das Bandmaterial 56 vorzugsweise mittig im abisolierten Bandmaterialteil 62 geschnitten; es kann jedoch auch Sonderfälle geben, in denen das Bandmaterial 56 nicht-mittig im abisolierten Bandmaterial 62 geschnitten wird. Die so freigetrennten Teile des Bandmaterials 56 sind die ungebogenen Stableiter 36.

Die ungebogenen Stableiter 36 werden dann über eine Automatisierungseinrichtung **64** zum Übergeben von gefertigten ungebogenen Stableitern 36 an das Stapelsystem 31, genauer ein erstes Stapelsystem **65** übergeben. Im ersten Stapelsystem 65 werden die ungebogenen Stableiter 36, die mit der Fertigungsstation 58 gefertigt werden, in die Kassette 1 eingelegt.

Wenn die Kassette 1 bis zum gewünschten Grad befüllt ist, kann die Kassette 1 an ein Zwischenlager **66** übergeben und dort mit weiteren Kassetten 1 zwischengelagert werden. Je nach Bedarf können die Kassetten 1 sofort oder zu einem späteren Zeitpunkt für die Weiterverarbeitung abgerufen werden.

Jede Kassette 1 ist eine mobile, im Fertigungsablauf einer elektrodynamischen Maschine einzeln handhabbare und einzeln transportable Struktur. Sie kann durch einen Roboter oder auch durch einen Werker insbesondere von der Fertigungsanlage 55 zum Zwischenlager 66 und vom Zwischenlager 66 zu einer Biegestation (siehe unten) verbracht werden. Typischerweise kann ein Werker eine einzelne Kassette 1 (leer oder auch mit ungebogenen Stableitern 36 befüllt) mit seinen Händen tragen, oder auch manuell ziehen oder schieben. Die Kassette 1 kann zu letzterem Zweck unterseitig Rollen oder Gleitstücke aufweisen.

Über hier drei zweite Stapelsysteme **67a, 67b, 67c** werden die ungebogenen Stableiter 36 dann hier drei Biegestationen **68a, 68b, 68c** zur Verfügung gestellt. Es können hier also drei Biegestationen 68a-68c von einer Fertigungsstation 58 ausreichend mit ungebogenen Stableitern 36 versorgt werden. Eine entsprechende Biegestation 68a-68c umfasst jeweils eine Biegeeinrichtung **70** und eine Automatisierungseinrichtung **69** zum Übergeben von ungebogenen Stableitern 36 an die Biegeeinrichtung 70. Mit der Biegeeinrichtung 70 werden dann die ungebogenen Stableiter 36 in gebogene Stableiter 57 weiterverarbeitet.

### Bezugszeichenliste

- 1: Kassette
- 2: Kassettenrahmen
- 3: Auflageelement
- 4a: erstes Wandelement
- 4b: zweites Wandelement
- 5: Zwischenraum
- 6a: erste Anlegefläche (des ersten Wandelements)
- 6b: zweite Anlegefläche (des zweiten Wandelements)
- 7a: erste Hauptseite (des Kassettenrahmens)
- 7b: zweite Hauptseite (des Kassettenrahmens)
- 8: Durchbruch
- 9: Beladungsseite (des Kassettenrahmens)
- 10: Beladungsspalt
- 11: zurückgesetzter Rücksprung
- 11a: mittlerer Rücksprung
- 12a-12e: Gleitstück
- 13a: erste Stirnseite (des Kassettenrahmens)
- 13b: zweite Stirnseite (des Kassettenrahmens)
- 14a: erste Seitenrolle
- 14b: zweite Seitenrolle
- 15a: Achse (der ersten Seitenrolle)
- 15b: Achse (der zweiten Seitenrolle)
- 16: Chip-Vertiefung
- 17a-17c: Rahmenelement
- 18: Griffelement
- 19: Oberseite (des Auflageelements)
- 20: Auflagefläche (das Auflageelements)
- 21: Unterseite (des Auflageelements)
- 22: Auflage-Rücksprung
- 23: Auflage-Durchbruch
- 24: Bodenseite (des Kassettenrahmens)
- 25: Betätigungsöffnung
- 25a, 25b: Betätigungsöffnung
- 26a: erste Bodenrolle
- 26b: zweite Bodenrolle
- 27a: Achse (der ersten Bodenrolle)
- 27b: Achse (der zweiten Bodenrolle)
- 28: unterste Position (des Auflageelements bezüglich der Stapelrichtung)
- 29a, 29b: Auflagekante
- 30a, 30b: Auflage-Gleitführung
- 31: Stapelsystem
- 32: (externe) Hubeinrichtung
- 32a, 32b: Hubeinrichtung
- 32c, 32d: (seitlich angreifende) Hubeinrichtung
- 33a: erster Sensor
- 33b: zweiter Sensor
- 34: Steuereinrichtung
- 35: Schwertelement
- 35a, 35b: Schwertelement
- 36: ungebogener Stableiter
- 36a: oberster Stableiter
- 36b: nächster Stableiter
- 37a: Bereich (des ersten Sensors zur Überprüfung der Verfahrposition)
- 37b: Bereich (des zweiten Sensors zur Überprüfung der Verfahrposition)
- 38: isolierter Stableiterteil
- 39: Isolationsschicht
- 40: abisolierter Stableiterteil
- 41: Kern (des ungebogenen Stableiters)
- 42: Messstrahl (der Sensoren)
- 43: Stapel (ungebogener Stableiter)
- 44: Isolationsmaterial-Ansammlung
- 45: Übergangsbereich (zwischen isoliertem Stableiterteil und abisoliertem Stableiterteil)
- 46: Automatisierungseinrichtung
- 46a: Greifvorrichtung
- 46b: Saugvorrichtung
- 47a, 47b: Auflageelement-Fortsatz
- 48a, 48b: Hubelement-Aufleger
- 49: Seitenöffnung
- 50a: Ausbuchtung (des ersten Wandelements)
- 50b: Ausbuchtung (des zweiten Wandelements)
- 51: Teilerelement
- 52: Nutzteil
- 53: Nicht-Nutzteil
- 54: RFID-Chip
- 55: Fertigungsanlage
- 56: Bandmaterial
- 57: gebogener Stableiter
- 58: Fertigungsstation
- 59: Bandmaterialrolle
- 60: Richteinrichtung
- 61: Abisoliereinrichtung
- 62: abisolierter Bandmaterialteil
- 63: Schneideinrichtung
- 64: Automatisierungseinrichtung (zum Übergeben von gefertigten ungebogenen Stableitern)
- 65: erstes Stapelsystem
- 66: Zwischenlager
- 67a-67c: zweite Stapelsysteme
- 68a-68c: Biegestationen
- 69: Automatisierungseinrichtung (zum Übergeben von ungebogenen Stableitern)
- 70: Biegeeinrichtung
- k_{S}: kurze Seite (des rechteckigen Querschnitts des ungebogenen Stableiters)
- l_{S}: Lange Seite (des rechteckigen Querschnitts des ungebogenen Stableiters)
- LR: Längsrichtung (des Kassettenrahmens)
- SR: Stapelrichtung
- VR₁: erste Verfahrrichtung
- VR₂: zweite Verfahrrichtung

## Patentansprüche

1. Kassette (1) zur Lagerung eines Stapels (43) von ungebogenen Stableitern (36),
umfassend
- einen Kassettenrahmen (2) mit einem ersten Wandelement (4a) und einem zweiten Wandelement (4b), die einander gegenüberliegen,
wobei zwischen den gegenüberliegenden Wandelementen (4a, 4b) ein Zwischenraum (5) ausgebildet ist,
und wobei der Zwischenraum (5) durch zueinander parallel ausgerichtete Anlegeflächen (6a, 6b) der Wandelemente (4a, 4b) für die Stableiter (36, 36a, 36b) begrenzt ist,
- und ein Auflageelement (3), das zwischen den Wandelementen (4a, 4b) entlang einer Stapelrichtung (SR) verschiebbar geführt ist,
wobei das Auflageelement (3) in einer bezüglich der Stapelrichtung (SR) untersten Position (28) am Kassettenrahmen (2) anschlägt,
wobei das Auflageelement (3) an einer Oberseite (19) eine Auflagefläche (20) für den Stapel (43) von ungebogenen Stableitern (36) ausbildet,
wobei die Kassette (1) so ausgebildet ist, dass das Auflageelement (3) für eine externe Hubeinrichtung (32, 32a-32d) für ein Verschieben zwischen den Wandelementen (4a, 4b) zugänglich ist,
wobei der Kassettenrahmen (2) an einer Beladungsseite (9), die einer Bodenseite (24) bezüglich der Stapelrichtung (SR) gegenüberliegt, einen Beladungsspalt (10) für das Einlegen und Entnehmen eines obersten Stableiters (36a) des Stapels (43) von ungebogenen Stableitern (36) auf der Auflagefläche (20) aufweist,
**dadurch gekennzeichnet, dass**
die Wandelemente (4a, 4b) relativ zur Beladungsseite (9) zurückgesetzte Rücksprünge (11) beiderseits des Beladungsspalts (10) aufweisen.

2. Kassette (1) nach Anspruch 1, **dadurch gekennzeichnet, dass** der Kassettenrahmen (2) an der Bodenseite (24) wenigstens eine Betätigungsöffnung (25, 25a, 25b) ausbildet, über die eine Unterseite (21) des Auflageelements (3) für einen Untergriff durch die externe Hubeinrichtung (32, 32a, 32b) zugänglich ist.

3. Kassette (1) nach Anspruch 1 oder 2, **dadurch gekennzeichnet, dass** der Kassettenrahmen (2) an der Bodenseite (24) Bodenrollen (26a, 26b) aufweist, auf denen die Kassette (1) verfahrbar ist, insbesondere wobei Achsen (27a, 27b) der Bodenrollen (26a, 26b) ausgerichtet sind für eine erste Verfahrrichtung (VR₁) parallel zu den Anlegeflächen (6a, 6b).

4. Kassette (1) nach einem der vorhergehenden Ansprüche, **dadurch gekennzeichnet, dass** der Kassettenrahmen (2) an Stirnseiten (13a, 13b) des Kassettenrahmens (2), die senkrecht zu den Anlegeflächen (6a, 6b) liegen, Seitenrollen (14a, 14b) aufweist, an denen die Kassette (1) aufgehängt und verfahren werden kann, insbesondere wobei Achsen (15a, 15b) der Seitenrollen (14a, 14b) ausgerichtet sind für eine zweite Verfahrrichtung (VR₂) senkrecht zu den Anlegeflächen (6a, 6b).

5. Kassette (1) nach einem der vorhergehenden Ansprüche, **dadurch gekennzeichnet, dass** am Kassettenrahmen (2) ein RFID-Chip (54) angeordnet ist, mit dem ein in der Kassette (1) gelagerter Stapel (43) von ungebogenen Stableitern (36) identifizierbar ist.

6. Kassette (1) nach einem der vorhergehenden Ansprüche, **dadurch gekennzeichnet, dass** außenseitlich am Kassettenrahmen (2) mehrere Gleitstücke (12a-12e) zum Führen der Kassette (1) entlang einer externen Gleitführung angeordnet sind, insbesondere wobei außenseitlich an jedem Wandelement (4a, 4b) an vier Ecken Gleitstücke (12a-12e) vorgesehen sind.

7. Kassette (1) nach einem der vorhergehenden Ansprüche, **dadurch gekennzeichnet, dass** in den Kassettenrahmen (2) ein reversibel einfügbares, sich in Stapelrichtung (SR) erstreckendes Teilerelement (51) eingesetzt ist, mit dem der Zwischenraum (5) in einen Nutzteil (52) und einen Nicht-Nutzteil (53) aufgeteilt ist, und dass das Auflageelement (3) im Nutzteil (52) zwischen den Wandelementen (4a, 4b) verschiebbar geführt ist.

8. Kassette (1) nach einem der vorhergehenden Ansprüche, **dadurch gekennzeichnet, dass** an Hauptseiten (7a, 7b) des Kassettenrahmens (2), die parallel zu den Anlegeflächen (6a, 6b) liegen, die Wandelemente (4a, 4b) eine Vielzahl von Durchbrüchen (8) aufweisen.

9. Stapelsystem (31), umfassend eine Kassette (1) nach einem der vorhergehenden Ansprüche und wenigstens eine Hubeinrichtung (32, 32a-32d), die am Auflageelement (3) angreift und mit der das Auflageelement (3) zwischen den Wandelementen (4a, 4b) verfahrbar ist.

10. Stapelsystem (31) nach Anspruch 9, **dadurch gekennzeichnet, dass** das Stapelsystem (31) einen ersten Sensor (33a) umfasst, mit dem eine Verfahrposition der Auflagefläche (20) des Auflageelements (3) und/oder eines obersten Stableiters (36a) eines Stapels (43) von ungebogenen Stableitern (36) auf der Auflagefläche (20) des Auflageelements (3) bezüglich der Stapelrichtung (SR) relativ zur Ebene der Beladungsseite (9) im Bereich (37a) des ersten Sensors (33a) überprüfbar ist.

11. Stapelsystem (31) nach Anspruch 10, **dadurch gekennzeichnet, dass** das Stapelsystem (31) weiterhin eine Steuereinrichtung (34) umfasst, die mit dem ersten Sensor (33a) und der wenigstens einen Hubeinrichtung (32) verbunden ist, wobei die Steuereinrichtung (34) dazu eingerichtet ist, das Auflageelement (3) mit der Hubeinrichtung (32) automatisch in eine Position bezüglich der Stapelrichtung (SR) zu verfahren, die geeignet ist für
- eine Ablage eines nächstens Stableiters (36b) auf der Auflagefläche (20) oder auf einem obersten Stableiter (36a) eines Stapels (43) von ungebogenen Stableitern (36) auf der Auflagefläche (20), oder
- eine Entnahme eines obersten Stableiters (36a) eines Stapels (43) von ungebogenen Stableitern (36) auf der Auflagefläche (20).

12. Stapelsystem (31) nach Anspruch 10, **dadurch gekennzeichnet, dass** das Stapelsystem (31) zwei Hubeinrichtungen (32a, 32b) aufweist, die an unterschiedlichen Stellen entlang einer Längsrichtung (LR) des Kassettenrahmens (2) am Auflageelement (3) angreifen, wobei die Längsrichtung (LR) parallel zu den Anlegeflächen (6a, 6b) und senkrecht zur Stapelrichtung (SR) verläuft,
und dass das Stapelsystem (31) weiterhin einen zweiten Sensor (33b) umfasst, mit dem eine Verfahrposition der Auflagefläche (20) des Auflageelements (3) und/oder eines obersten Stableiters (36a) eines Stapels (43) von ungebogenen Stableitern (36) auf der Auflagefläche (20) des Auflageelements (3) bezüglich der Stapelrichtung (SR) relativ zur Ebene der Beladungsseite (9) im Bereich (37b) des zweiten Sensors (33b) überprüfbar ist, wobei der erste Sensor (33a) und der zweite Sensor (33b) an unterschiedlichen Stellen entlang der Längsrichtung (LR) des Kassettenrahmens (2) angeordnet sind.

13. Stapelsystem (31) nach Anspruch 12, **dadurch gekennzeichnet, dass** das Stapelsystem (31) eine Steuereinrichtung (34) umfasst, die mit dem ersten Sensor (33a) und dem zweiten Sensor (33b) und den zwei Hubeinrichtungen (32a, 32b) verbunden ist, wobei die Steuereinrichtung (43) dazu eingerichtet ist, das Auflageelement (3) mit den beiden Hubeinrichtungen (32a, 32b) automatisch in eine Position bezüglich der Stapelrichtung (SR) zu verfahren, die geeignet ist für
- eine Ablage eines nächsten Stableiters (36b) auf der Auflagefläche (20) oder auf einem obersten Stableiter (36a) eines Stapels (43) von ungebogenen Stableitern (36) auf der Auflagefläche (20), wobei die zur Ablage dienende Auflagefläche (20) oder der zur Ablage dienende oberste Stableiter (36a) in einer zur Ebene der Beladungsseite (9) parallelen Ausrichtung gehalten wird, oder
- eine Entnahme eines obersten Stableiters (36a) eines Stapels (43) von ungebogenen Stableitern (36) auf der Auflagefläche (20), wobei der zu entnehmende oberste Stableiter (36a) in einer zur Ebene der Beladungsseite (9) parallelen Ausrichtung gehalten wird.

14. Stapelsystem (31) nach einem der Ansprüche 9 bis 13, **dadurch gekennzeichnet, dass** der Kassettenrahmen (2) an der Bodenseite (24) wenigstens eine Betätigungsöffnung (25, 25a, 25b) ausbildet, und dass die wenigstens eine Hubeinrichtung (32, 32a, 32b) mit einem Schwertelement (35, 35a, 35b) durch die Betätigungsöffnung (25, 25a, 25b) an einer Unterseite (21) des Auflageelements (3) das Auflageelement (3) untergreift.

15. Fertigungsanlage (55) für Stableiter (36, 57), umfassend
- wenigstens eine Fertigungsstation (58) zur Fertigung von ungebogenen Stableitern (36), insbesondere jeweils mit einer Richteinrichtung (60) für Bandmaterial (56), einer Abisoliereinrichtung (61) für das Bandmaterial (56), einer Schneideinrichtung (63) für das Bandmaterial (56) und einer Automatisierungseinrichtung (64) zum Übergeben von gefertigten ungebogenen Stableitern (36) an ein Stapelsystem (31),
- wenigstens ein erstes Stapelsystem (65) nach einem der Ansprüche 9 bis 14, zum Einlagern von mit der wenigstens einen Fertigungsstation (58) gefertigten, ungebogenen Stableitern (36) in Kassetten (1),
- ein Zwischenlager (66) für mit ungebogenen Stableitern (36) gefüllte Kassetten (1);
- wenigstens ein zweites Stapelsystem (67a-67c) nach einem der Ansprüche 9 bis 14, zum Bereitstellen von ungebogenen Stableitern (36) an wenigstens einer Biegestation (68a-68c);
- wenigstens eine Biegestation (68a-68c) zur Umformung von ungebogenen Stableitern (36) in gebogene Stableiter (57), insbesondere mit einer Biegeeinrichtung (70) und einer Automatisierungseinrichtung (69) zum Übergeben von ungebogenen Stableitern (36) von einem Stapelsystem (31) an die Biegeeinrichtung (70).

16. Fertigungsanlage (55) nach Anspruch 15, **dadurch gekennzeichnet, dass** die Anzahl der Biegestationen (68a-68c) größer ist als die Anzahl der Fertigungsstationen (58).

17. Verwendung einer Kassette (1) nach einem der Ansprüche 1 bis 8 zum Lagern von Stableitern (36, 36a, 36b), wobei auf der Auflagefläche (20) des Auflageelements (3) ein Stapel (43) von ungebogenen Stableitern (36) eingerichtet ist.

18. Verwendung nach Anspruch 17, **dadurch gekennzeichnet, dass** die ungebogenen Stableiter (36) einen rechteckigen Querschnitt mit einer langen Seite (l_{S}) und einer kurzen Seite (k_{S}) aufweisen, und dass der Stapel (43) so gebildet wird, dass die langen Seiten (l_{S}) aufeinander liegen, und ein Abstand der Anlegeflächen (6a, 6b) der Breite der langen Seite (l_{S}) entspricht.

19. Verwendung nach Anspruch 17, **dadurch gekennzeichnet, dass** die ungebogenen Stableiter (36) einen rechteckigen Querschnitt mit einer langen Seite (l_{S}) und einer kurzen Seite (k_{S}) aufweisen, und dass der Stapel (43) so gebildet wird, dass die kurzen Seiten (k_{S}) aufeinander liegen, und ein Abstand der Anlegeflächen (6a, 6b) der Breite der kurzen Seite (k_{S}) entspricht.

## Claims

1. Cassette (1) for storing a stack (43) of unbent bar conductors (36), comprising:
- a cassette frame (2) with a first wall element (4a) and a second wall element (4b) which are opposite one another,
wherein an intermediate space (5) is formed between the opposing wall elements (4a, 4b),
and wherein the intermediate space (5) is delimited by mutually parallel contact surfaces (6a, 6b) of the wall elements (4a, 4b) for the bar conductors (36, 36a, 36b),
- and a support element (3) which is guided displaceably between the wall elements (4a, 4b) along a stacking direction (SR),
wherein the support element (3) abuts the cassette frame (2) in a lowest position (28) with respect to the stacking direction (SR),
wherein on a top side (19), the support element (3) forms a support surface (20) for the stack (43) of unbent bar conductors (36),
wherein the cassette (1) is designed so that the support element (3) is accessible for an external lifting device (32, 32a-32d) for displacement between the wall elements (4a, 4b),
wherein the cassette frame (2) has, on a loading side (9) that is opposite a bottom side (24) with respect to the stacking direction (SR), a loading gap (10) for the insertion and removal of an uppermost bar conductor (36a) of the stack (43) of unbent bar conductors (36) on the support surface (20),
**characterized in that**
the wall elements (4a, 4b) have recesses (11) set back relative to the loading side (9) on both sides of the loading gap (10).

2. Cassette (1) according to claim 1, **characterized in that** the cassette frame (2) forms at least one actuating opening (25, 25a, 25b) on the bottom side (24), via which an underside (21) of the support element (3) is accessible to be engaged from below by the external lifting device (32, 32a, 32b).

3. Cassette (1) according to claim 1 or 2, **characterized in that** the cassette frame (2) has, on the bottom side (24), bottom rollers (26a, 26b) on which the cassette (1) can be moved, in particular wherein axes (27a, 27b) of the bottom rollers (26a, 26b) are aligned for a first direction of movement (VR₁) parallel to the contact surfaces (6a, 6b).

4. Cassette (1) according to any preceding claim, **characterized in that** the cassette frame (2) has, on end faces (13a, 13b) of the cassette frame (2) which lie perpendicular to the contact surfaces (6a, 6b), side rollers (14a, 14b) on which the cassette (1) can be suspended and moved, in particular wherein axes (15a, 15b) of the side rollers (14a, 14b) are aligned for a second direction of movement (VR₂) perpendicular to the contact surfaces (6a, 6b).

5. Cassette (1) according to any preceding claim, **characterized in that** an RFID chip (54) is arranged on the cassette frame (2), with which a stack (43) of unbent bar conductors (36) stored in the cassette (1) can be identified.

6. Cassette (1) according to any preceding claim, **characterized in that** a plurality of sliding pieces (12a-12e) for guiding the cassette (1) along an external sliding guide are arranged on the outside of the cassette frame (2), in particular wherein sliding pieces (12a-12e) are provided on the outside of each wall element (4a, 4b) at four corners.

7. Cassette (1) according to any preceding claim, **characterized in that** a reversibly insertable divider element (51) extending in the stacking direction (SR) is inserted into the cassette frame (2), and which divides the intermediate space (5) into a usable part (52) and a non-usable part (53), and that the support element (3) is displaceably guided in the useful part (52) between the wall elements (4a, 4b).

8. Cassette (1) according to any preceding claim, **characterized in that** on main sides (7a, 7b) of the cassette frame (2), which lie parallel to the contact surfaces (6a, 6b), the wall elements (4a, 4b) have a plurality of openings (8).

9. Stacking system (31) comprising a cassette (1) according to any preceding claim, and at least one lifting device (32, 32a-32d) which engages the support element (3) and with which the support element (3) can be moved between the wall elements (4a, 4b).

10. Stacking system (31) according to claim 9, **characterized in that** the stacking system (31) comprises a first sensor (33a) with which a travel position of the support surface (20) of the support element (3) and/or of an uppermost bar conductor (36a) of a stack (43) of unbent bar conductors (36) on the support surface (20) of the support element (3) can be checked with respect to the stacking direction (SR) relative to the plane of the loading side (9) in the region (37a) of the first sensor (33a).

11. Stacking system (31) according to claim 10, **characterized in that** the stacking system (31) further comprises a control device (34) which is connected to the first sensor (33a) and to the at least one lifting device (32), wherein the control device (34) is designed to automatically move the support element (3) with the lifting device (32) into a position with respect to the stacking direction (SR) which is suitable for:
- depositing a next bar conductor (36b) on the support surface (20) or on an uppermost bar conductor (36a) of a stack (43) of unbent bar conductors (36) on the support surface (20), or
- removing an uppermost bar conductor (36a) from a stack (43) of unbent bar conductors (36) on the support surface (20).

12. Stacking system (31) according to claim 10, **characterized in that** the stacking system (31) has two lifting devices (32a, 32b) which engage the support element (3) at different points along a longitudinal direction (LR) of the cassette frame (2), wherein the longitudinal direction (LR) runs parallel to the contact surfaces (6a, 6b) and perpendicular to the stacking direction (SR),
and **in that** the stacking system (31) further comprises a second sensor (33b) with which a travel position of the support surface (20) of the support element (3) and/or of an uppermost bar conductor (36a) of a stack (43) of unbent bar conductors (36) on the support surface (20) of the support element (3) can be checked with respect to the stacking direction (SR) relative to the plane of the loading side (9) in the region (37b) of the second sensor (33b), wherein the first sensor (33a) and the second sensor (33b) are arranged at different locations along the longitudinal direction (LR) of the cassette frame (2).

13. Stacking system (31) according to claim 12, **characterized in that** the stacking system (31) comprises a control device (34) which is connected to the first sensor (33a) and the second sensor (33b) and to the two lifting devices (32a, 32b), wherein the control device (43) is designed to automatically move the support element (3) with the two lifting devices (32a, 32b) into a position with respect to the stacking direction (SR) which is suitable for:
- depositing a next bar conductor (36b) on the support surface (20) or on an uppermost bar conductor (36a) of a stack (43) of unbent bar conductors (36) on the support surface (20), wherein the support surface (20) serving for depositing, or the uppermost bar conductor (36a) serving for depositing, is held in an orientation parallel to the plane of the loading side (9), or
- removing an uppermost bar conductor (36a) of a stack (43) of unbent bar conductors (36) on the support surface (20), wherein the uppermost bar conductor (36a) to be removed is held in an orientation parallel to the plane of the loading side (9).

14. Stacking system (31) according to any of claims 9 to 13,
**characterized in that** the cassette frame (2) forms at least one actuating opening (25, 25a, 25b) on the bottom side (24), and that the at least one lifting device (32, 32a, 32b) with a sword element (35, 35a, 35b) engages the support element (3) through the actuating opening (25, 25a, 25b) on an underside (21) of the support element (3).

15. Manufacturing system (55) for bar conductors (36, 57) comprising:
- at least one manufacturing station (58) for manufacturing unbent bar conductors (36), in particular each with a straightening device (60) for tape material (56), a stripping device (61) for the tape material (56), a cutting device (63) for the tape material (56), and an automation device (64) for transferring manufactured unbent bar conductors (36) to a stacking system (31),
- at least one first stacking system (65) according to any of claims 9 to 14, for storing unbent bar conductors (36) manufactured with the at least one manufacturing station (58) in cassettes (1),
- an intermediate storage (66) for cassettes (1) filled with unbent conductor bars (36);
- at least one second stacking system (67a-67c) according to any of claims 9 to 14, for providing unbent bar conductors (36) to at least one bending station (68a-68c);
- at least one bending station (68a-68c) for transforming unbent bar conductors (36) into bent bar conductors (57), in particular with a bending device (70) and an automation device (69) for transferring unbent bar conductors (36) from a stacking system (31) to the bending device (70).

16. Manufacturing system (55) according to claim 15, **characterized in that** the number of bending stations (68a-68c) is greater than the number of manufacturing stations (58).

17. Use of a cassette (1) according to any of claims 1 to 8 for storing bar conductors (36, 36a, 36b), wherein a stack (43) of unbent bar conductors (36) is arranged on the support surface (20) of the support element (3).

18. Use according to claim 17, **characterized in that** the unbent rod conductors (36) have a rectangular cross section with a long side (lₛ) and a short side (kₛ), and that the stack (43) is formed such that the long sides (lₛ) lie on top of each other, and a distance between the contact surfaces (6a, 6b) corresponds to the width of the long side (lₛ).

19. Use according to claim 17, **characterized in that** the unbent bar conductors (36) have a rectangular cross section with a long side (lₛ) and a short side (kₛ), and that the stack (43) is formed such that the short sides (kₛ) lie on top of each other, and a distance between the contact surfaces (6a, 6b) corresponds to the width of the short side (kₛ).

## Revendications

1. Cassette (1) permettant de stocker une pile (43) de conducteurs à barres non pliés (36),
comprenant
- un châssis de cassette (2) avec un premier élément de paroi (4a) et un second élément de paroi (4b) opposés l'un à l'autre,
un espace (5) étant formé entre les éléments de paroi (4a, 4b) opposés,
et l'espace (5) étant limité par des surfaces d'application (6a, 6b), orientées parallèlement les unes aux autres et destinées aux conducteurs à barres (36, 36a, 36b), des éléments de paroi (4a, 4b),
- et un élément d'appui (3) qui est guidé de manière mobile entre les éléments de paroi (4a, 4b) le long d'une direction d'empilement (SR),
l'élément d'appui (3) étant en butée contre le châssis de cassette (2) dans une position (28) la plus basse par rapport à la direction d'empilement (SR),
l'élément d'appui (3) formant sur une face supérieure (19) une surface d'appui (20) pour la pile (43) de conducteurs à barres non pliés (36), la cassette (1) étant conçue de sorte que l'élément d'appui (3) est accessible à un dispositif de levage externe (32, 32a-32d) en vue d'un déplacement entre les éléments de paroi (4a, 4b),
le châssis de cassette (2) présentant, sur un côté de chargement (9) opposé à un côté de fond (24) par rapport à la direction d'empilement (SR), une fente de chargement (10) destinée à l'insertion et au retrait d'un conducteur à barres (36a) le plus supérieur de la pile (43) de conducteurs à barres non pliés (36) sur la surface d'appui (20),
**caractérisée en ce que**
les éléments de paroi (4a, 4b) présentent des retraits (11) reculés par rapport au côté de chargement (9) des deux côtés de la fente de chargement (10).

2. Cassette (1) selon la revendication 1, **caractérisée en ce que** le châssis de cassette (2) forme au moins une ouverture d'actionnement (25, 25a, 25b) au niveau du côté de fond (24), par laquelle une face inférieure (21) de l'élément d'appui (3) est accessible à une mise en prise par en dessous par le dispositif de levage externe (32, 32a, 32b).

3. Cassette (1) selon la revendication 1 ou 2, **caractérisée en ce que** le châssis de cassette (2) présente sur le côté de fond (24) des rouleaux de fond (26a, 26b) sur lesquels la cassette (1) peut être déplacée, des axes (27a, 27b) des rouleaux de fond (26a, 26b) étant en particulier orientés pour un premier sens de déplacement (VR1) parallèle aux surfaces d'application (6a, 6b).

4. Cassette (1) selon l'une quelconque des revendications précédentes, **caractérisée en ce que** le châssis de cassette (2) présente, sur les côtés frontaux (13a, 13b) du châssis de cassette (2) qui sont perpendiculaires aux surfaces d'application (6a, 6b), des rouleaux latéraux (14a, 14b) sur lesquels la cassette (1) peut être suspendue et déplacée, les axes (15a, 15b) des rouleaux latéraux (14a, 14b) étant en particulier orientés pour un second sens de déplacement (VR2) perpendiculairement aux surfaces d'application (6a, 6b).

5. Cassette (1) selon l'une quelconque des revendications précédentes, **caractérisée en ce qu'**une puce RFID (54) est agencée sur le châssis de cassette (2), avec laquelle une pile (43) de conducteurs à barres non pliés (36) stockée dans la cassette (1) peut être identifiée.

6. Cassette (1) selon l'une quelconque des revendications précédentes, **caractérisée en ce que** plusieurs coulisseaux (12a à 12e) sont agencés à l'extérieur sur le châssis de cassette (2) afin de guider la cassette (1) le long d'un guide de coulissement externe, des coulisseaux (12a à 12e) étant en particulier prévus à l'extérieur aux quatre coins de chaque élément de paroi (4a, 4b).

7. Cassette (1) selon l'une quelconque des revendications précédentes, **caractérisée en ce qu'**un élément diviseur (51) pouvant être inséré de manière réversible et s'étendant dans la direction d'empilement (SR) est inséré dans le châssis de cassette (2), avec lequel l'espace (5) est divisé en une partie utile (52) et une partie non utile (53), et **en ce que** l'élément d'appui (3) est guidé de manière coulissante dans la partie utile (52) entre les éléments de paroi (4a, 4b).

8. Cassette (1) selon l'une quelconque des revendications précédentes, **caractérisée en ce que**, sur des côtés principaux (7a, 7b) du châssis de cassette (2) qui sont parallèles aux surfaces d'application (6a, 6b), les éléments de paroi (4a, 4b) présentent une pluralité de perforations (8).

9. Système d'empilage (31) comprenant une cassette (1) selon l'une quelconque des revendications précédentes et au moins un dispositif de levage (32, 32a à 32d) qui agit sur l'élément de support (3) et avec lequel l'élément de support (3) peut être déplacé entre les éléments de paroi (4a, 4b).

10. Système d'empilement (31) selon la revendication 9, **caractérisé en ce que** le système d'empilement (31) comprend un premier capteur (33a) avec lequel une position de déplacement de la surface d'appui (20) de l'élément d'appui (3) et/ou d'un conducteur à barres (36a) le plus supérieur d'une pile (43) de conducteurs à barres non pliés (36) sur la surface d'appui (20) de l'élément d'appui (3) par rapport à la direction d'empilement (SR) peut être vérifiée relativement au plan du côté de chargement (9) dans la région (37a) du premier capteur (33a).

11. Système d'empilage (31) selon la revendication 10, **caractérisé en ce que** le système d'empilage (31) comprend en outre un dispositif de commande (34) qui est relié au premier capteur (33a) et au au moins un dispositif de levage (32), le dispositif de commande (34) étant conçu pour déplacer automatiquement l'élément d'appui (3) grâce au dispositif de levage (32) dans une position, par rapport à la direction d'empilage (SR), qui convient pour
- un dépôt d'un conducteur à barres (36b) ultérieur sur la surface d'appui (20) ou sur un conducteur à barres (36a) le plus supérieur d'une pile (43) de conducteurs à barres non pliés (36) sur la surface d'appui (20), ou
- un retrait d'un conducteur à barres (36a) le plus supérieur d'une pile (43) de conducteurs à barres non pliés (36) sur la surface d'appui (20).

12. Système d'empilage (31) selon la revendication 10, **caractérisé en ce que** le système d'empilage (31) présente deux dispositifs de levage (32a, 32b) qui agissent sur l'élément d'appui (3) en différents endroits le long d'une direction longitudinale (LR) du châssis de cassette (2), la direction longitudinale (LR) étant parallèle aux surfaces d'application (6a, 6b) et perpendiculaire à la direction d'empilage (SR),
et **en ce que** le système d'empilage (31) comprend en outre un second capteur (33b) avec lequel une position de déplacement de la surface d'appui (20) de l'élément d'appui (3) et/ou d'un conducteur à barres (36a) le plus supérieur d'une pile (43) de conducteurs à barres non pliés (36) par rapport à la direction d'empilage (SR) sur la surface d'appui (20) de l'élément d'appui (3) peut être vérifiée dans la région (37b) du second capteur (33b) relativement au plan du côté de chargement (9), le premier capteur (33a) et le second capteur (33b) étant agencés à différents endroits le long de la direction longitudinale (LR) du châssis de cassette (2).

13. Système d'empilage (31) selon la revendication 12, **caractérisé en ce que** le système d'empilage (31) comprend un dispositif de commande (34) qui est relié au premier capteur (33a) et au second capteur (33b) et aux deux dispositifs de levage (32a, 32b), le dispositif de commande (43) étant conçu pour déplacer automatiquement l'élément d'appui (3) avec les deux dispositifs de levage (32a, 32b) dans une position par rapport à la direction d'empilage (SR) qui convient pour
- un dépôt d'un conducteur à barres (36b) suivant sur la surface d'appui (20) ou sur un conducteur à barres (36a) le plus supérieur d'une pile (43) de conducteurs à barres non pliés (36) sur la surface d'appui (20), la surface d'appui (20) servant au dépôt ou le conducteur à barres (36a) le plus supérieur servant au dépôt étant retenu dans une orientation parallèle au plan du côté de chargement (9), ou
- un retrait d'un conducteur à barres (36a) le plus supérieur d'une pile (43) de conducteurs à barres non pliés (36) sur la surface d'appui (20), le conducteur à barres (36a) le plus supérieur à retirer étant retenu dans une orientation parallèle au plan du côté de chargement (9).

14. Système d'empilage (31) selon l'une quelconque des revendications 9 à 13, **caractérisé en ce que** le châssis de cassette (2) forme au moins une ouverture d'actionnement (25, 25a, 25b) sur le côté de fond (24), et **en ce qu'**un élément formant lame (35, 35a, 35b) du au moins un dispositif de levage (32, 32a, 32b) vient en prise par en dessous avec l'élément d'appui (3) à travers l'ouverture d'actionnement (25, 25a, 25b).

15. Installation de fabrication (55) pour des conducteurs à barres (36, 57), comprenant
- au moins un poste de fabrication (58) permettant de fabriquer des conducteurs à barres non pliés (36), en particulier respectivement avec un dispositif de lissage (60) pour un matériau en bande (56), un dispositif de dénudage (61) pour le matériau en bande (56), un dispositif de coupe (63) pour le matériau en bande (56) et un dispositif d'automatisation (64) permettant de transférer de conducteurs à barres non pliés (36) fabriqués à un système d'empilage (31),
- au moins un premier système d'empilement (65) selon l'une quelconque des revendications 9 à 14, permettant de stocker dans des cassettes (1) des conducteurs à barres non pliés (36) fabriqués par le au moins un poste de fabrication (58),
- un palier intermédiaire (66) pour des cassettes (1) remplies de conducteurs à barres non pliés (36) ;
- au moins un second système d'empilement (67a-67c) selon l'une quelconque des revendications 9 à 14, permettant de fournir des conducteurs à barres non pliés (36) à au moins un poste de pliage (68a à 68c) ;
- au moins un poste de pliage (68a-68c) permettant de transformer des conducteurs à barres non pliés (36) en conducteurs à barres pliés (57), en particulier avec un dispositif de pliage (70) et un dispositif d'automatisation (69) permettant de transférer des conducteurs à barres non pliés (36) d'un système d'empilement (31) au dispositif de pliage (70).

16. Installation de fabrication (55) selon la revendication 15, **caractérisée en ce que** le nombre de postes de pliage (68a à 68c) est supérieur au nombre de postes de fabrication (58).

17. Utilisation d'une cassette (1) selon l'une quelconque des revendications 1 à 8 pour le stockage de conducteurs à barres (36, 36a, 36b), une pile (43) de conducteurs à barres non pliés (36) étant agencée sur la surface d'appui (20) de l'élément d'appui (3).

18. Utilisation selon la revendication 17, **caractérisée en ce que** les conducteurs à barres non pliés (36) présentent une section transversale rectangulaire avec un côté long (l_{S}) et un côté court (ks), et **en ce que** la pile (43) est formée de sorte que les côtés longs (l_{S}) sont superposés et qu'une distance entre les surfaces d'application (6a, 6b) corresponde à la largeur du côté long (l_{S}).

19. Utilisation selon la revendication 17, **caractérisée en ce que** les conducteurs à barres non pliés (36) présentent une section transversale rectangulaire avec un côté long (l_{S}) et un côté court (ks), et **en ce que** la pile (43) est formée de sorte que les côtés courts (k_{S}) sont superposés et qu'une distance entre les surfaces d'application (6a, 6b) corresponde à la largeur du côté court (ks).
